# EUROPEAN PATENT APPLICATION

(11) **EP 4 810 407 A1**
(43) Date of publication of application: **23.09.2026**
(21) Application number: 24890531.7
(22) Date of filing: 05.11.2024
(51) Int. Cl.: B65G 1/137, B65G 1/04

(54) **SEEDING CONTROL METHOD, SEEDING SYSTEM, AND WORKSTATION**

(30) Priority: 13.11.2023 CN 202311504829
(71) Applicant: Beijing Geekplus Technology Co. Ltd, Beijing 100102 (CN)
(72) Inventor: LI, Hongbo, Beijing 100102 (CN)
(74) Representative: Manna, Sara
(86) International application number: PCT/CN2024/129839
(87) International publication number: WO 2025/103174

(57) **Abstract**

The present disclosure relates to the technical field of intelligent warehousing. Disclosed are a seeding control method, a seeding system, and a workstation. The method comprises: in response to a movable carrier reaching a parking area of a target workstation, acquiring goods information of seeding-pending goods on the movable carrier; on the basis of the goods information of the seeding-pending goods, determining seeding information of seeding positions on a seeding wall of the target workstation; on the basis of the seeding information, determining the seeding quantities of the seeding-pending goods required on the seeding positions, and seeding the seeding-pending goods to seeding-pending containers on the seeding positions according to the seeding quantities corresponding to the seeding positions; and in the seeding process, acquiring the seeding states of the seeding positions on the seeding wall, and generating a first transfer instruction on the basis of the seeding states of the seeding positions, wherein the first transfer instruction is used for instructing the target workstation to transfer seeding-completed containers to a target carrier.

## Description

### CROSS-REFERENCE TO RELATED APPLICATION

The present disclosure claims priority to Chinese Patent Application No. 202311504829.0, filed on November 13, 2023, the entire content of which is incorporated into the present disclosure by reference.

### FIELD

Embodiments of the present disclosure relate to the field of intelligent warehousing technologies, and in particular to a seeding control method, a seeding system and a workstation.

### BACKGROUND

With the rapid development of the logistics industry and continuous improvement of intelligence, the efficiency of goods-circulation has been continuously enhanced. For example, in the field of intelligent warehousing, a plurality of orders can be collected for batch picking goods and then seeded into separate delivery notes, which enables the goods to be picked to be evenly distributed throughout the warehouse, and picking goods can be performed in only one warehouse, improving picking efficiency.

During outbound or shelving of goods, users usually classify goods by type and quantity to meet the requirements of goods by type and quantity for each order. However, this method mainly relies on manual labor, and when the quantity of goods is large, picking efficiency is low and the cost is thus high.

### SUMMARY

Embodiments of the present disclosure provide a seeding control method, a seeding system and a workstation.

According to a first aspect of embodiments of the present disclosure, a seeding control method applied to a control device is provided. The method includes: acquiring goods information of to-be-seeded goods on a movable carrier in response to the movable carrier arriving at a docking area of a target workstation; determining seeding information of each of a plurality of seeding positions on a seeding wall of the target workstation based on the goods information of the to-be-seeded goods; the seeding information of each of the plurality of seeding positions includes a seeding quantity of the to-be-seeded goods at the respective seeding position; determining the seeding quantity of the to-be-seeded goods required at each of the plurality of seeding positions based on the seeding information, so as to seed the to-be-seeded goods into a to-be-seeded container at each of the plurality of seeding positions according to the seeding quantity corresponding to the respective seeding position; during seeding, acquiring a seeding state of each of the plurality of seeding positions on the seeding wall, and generating a first transfer instruction based on seeding states of the plurality of seeding positions; the first transfer instruction is configured to instruct the target workstation to transfer a seeded container that has completed seeding to a target carrier.

According to a second aspect of embodiments of the present disclosure, a seeding system is provided. The seeding system includes
a target workstation, the target workstation includes a seeding wall with a plurality of seeding positions and a first container pick-and-place device, and the plurality of seeding positions are configured for placing a to-be-seeded container; a movable carrier for placing to-be-seeded goods; a handling robot for transporting the movable carrier carrying the to-be-seeded goods to a docking area of the target workstation; a target carrier for placing the seeded container that has completed seeding; and a control device configured to: acquire goods information of the to-be-seeded goods on the movable carrier in response to the movable carrier arriving at a docking area of the target workstation; determine seeding information of each of the plurality of seeding positions on the seeding wall of the target workstation based on the goods information of the to-be-seeded goods; the seeding information of each of the plurality of seeding positions includes a seeding quantity of the to-be-seeded goods at the respective seeding position; generate an output instruction based on the seeding information; during seeding, acquire a seeding state of each of the plurality of seeding positions on the seeding wall, and generate a first transfer instruction based on seeding states of the plurality of seeding positions; the target workstation is configured to: acquire the output instruction, and output the seeding quantity of the to-be-seeded goods at each of the plurality of seeding positions according to the output instruction, so that a user seeds the to-be-seeded goods into the to-be-seeded container at each of the plurality of seeding positions according to the seeding quantity corresponding to the respective seeding position; and acquire the first transfer instruction, and transfer the seeded container that has completed seeding to the target carrier according to the first transfer instruction.

According to a third aspect of embodiments of the present disclosure, a workstation is provided. The workstation includes a seeding wall including a plurality of seeding positions and an output device arranged at each of the plurality of seeding positions, the plurality of seeding positions are configured for placing a to-be-seeded container; the output device is configured to output a seeding quantity of to-be-seeded goods at each of the plurality of seeding positions corresponding to the output device arranged at the respective seeding position, so that a user seeds the to-be-seeded goods into the to-be-seeded container at each of the plurality of seeding positions according to the seeding quantity corresponding to the respective seeding position; and a first container pick-and-place device configured to, during seeding of the to-be-seeded goods, acquire a first transfer instruction, and transfer a seeded container that has completed seeding at the plurality of seeding positions to a target carrier based on the first transfer instruction; the first transfer instruction is generated according to seeding states of the plurality of seeding positions on the seeding wall.

According to a fourth aspect of embodiments of the present disclosure, an electronic device is provided, including: one or more processors; a memory configured to store one or more programs; wherein when the plurality of programs are executed by the plurality of processors, the plurality of processors implement the seeding control method according to any one of the above embodiments.

According to a fifth aspect of embodiments of the present disclosure, a computer-readable storage medium is provided, having a computer program stored thereon, which when executed by a processor, implements the seeding control method according to any one of the above embodiments.

### BRIEF DESCRIPTION OF THE DRAWINGS

The accompanying drawings are only for illustrating embodiments and are not to be construed as limiting the present disclosure. Moreover, the same reference numerals denote the same components throughout the accompanying drawings. In the drawings:
FIG. 1 shows a schematic diagram of a seeding system provided by an embodiment of the present disclosure;
FIG. 2 shows a schematic structural diagram of a target workstation provided by an embodiment of the present disclosure;
FIG. 3 shows a schematic diagram of a seeding control method provided by an embodiment of the present disclosure;
FIG. 4 shows a schematic diagram of another seeding control method provided by an embodiment of the present disclosure;
FIG. 5 shows a schematic diagram of yet another seeding control method provided by an embodiment of the present disclosure;
FIG. 6 shows a schematic diagram of a docking area of a target workstation provided by an embodiment of the present disclosure;
FIG. 7 shows a schematic diagram of yet another seeding control method provided by an embodiment of the present disclosure;
FIG. 8 shows a schematic diagram of yet another seeding control method provided by an embodiment of the present disclosure;
FIG. 9 shows a schematic diagram of yet another seeding control method provided by an embodiment of the present disclosure;
FIG. 10 shows a schematic diagram of another seeding system provided by an embodiment of the present disclosure;
FIG. 11 shows a schematic diagram of yet another seeding control method provided by an embodiment of the present disclosure;
FIG. 12 shows a schematic diagram of yet another seeding system provided by an embodiment of the present disclosure;
FIG. 13 shows a schematic diagram of a workstation provided by an embodiment of the present disclosure;
FIG. 14 shows a schematic diagram of an electronic device provided by an embodiment of the present disclosure.

### DETAILED DESCRIPTION

Illustrative embodiments of the present disclosure will be described in more detail below with reference to the accompanying drawings. Although illustrative embodiments of the present disclosure are shown in the accompanying drawings, it should be understood that the present disclosure may be implemented in various forms and should not be limited by embodiments set forth herein.

Generally, to improve the efficiency of goods outbound, a seeding wall provided with a plurality of seeding positions can be used to seed goods required by an order, and a user can seed goods into a container at the corresponding seeding position of the seeding wall according to order requirements. For example, when an order includes goods to be delivered to a plurality of stores, a user need to classify the goods according to the cargo requirements of each store, and seed the goods of each store into the container at each seeding position of the seeding wall respectively. In this way, during transportation, the container at the seeded seeding position can be directly transported to a processing station of the corresponding store respectively.

However, during seeding, users need to determine the type and quantity of goods to be seeded at each seeding position on the seeding wall, and manually remove the container at the seeding position after completing seeding at one seeding position. This process consumes a lot of time and labor costs, resulting in low goods picking efficiency.

To solve the above problems, embodiments of the present disclosure provide a seeding control method, a seeding system and a workstation. By responding to arrival of a movable carrier at a docking area of a target workstation, goods information of to-be-seeded goods on the movable carrier is acquired; seeding information of each of a plurality of seeding positions on the seeding wall of the target workstation is determined based on the information of the to-be-seeded goods; a seeding quantity of the to-be-seeded goods required at each of the plurality of seeding positions is determined based on the seeding information, so as to seed the to-be-seeded goods into a to-be-seeded container at each of the plurality of seeding positions according to the seeding quantity corresponding to the respective seeding position; during seeding, a seeding state of each of the plurality of seeding positions on the seeding wall is acquired, and a first transfer instruction is generated based on seeding states of the plurality of seeding positions to instruct the target workstation to transfer a seeded container that has completed seeding to a target carrier. By applying the technical solution according to embodiments of the present disclosure, on the one hand, determining the seeding quantity of the to-be-seeded goods at each of the plurality of seeding positions facilitates seeding for a user, allowing the user to seed the to-be-seeded goods into the to-be-seeded container at each of the plurality of seeding positions according to the seeding quantity of the to-be-seeded goods of the respective seeding position; on the other hand, the target workstation can realize the transfer of the container on the seeding wall without manual box replacement, thereby improving the seeding efficiency of goods. Therefore, the seeding system provided by embodiments of the present disclosure can improve the degree of seeding automation, facilitate seeding for user, thereby improving seeding efficiency and saving labor costs.

The seeding system provided by embodiments of the present disclosure will be described below with reference to the accompanying drawings.

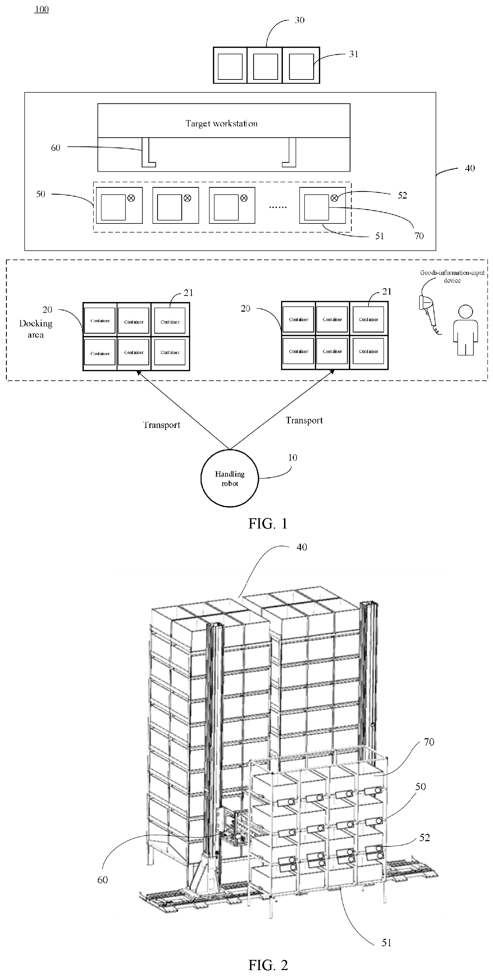

FIG. 1 is a schematic diagram of a seeding system according to embodiments of the present disclosure. As shown in FIG. 1, the seeding system 100 includes a handling robot 10, a movable carrier 20, a target carrier 30, a target workstation 40, and a control device (not shown in FIG. 1).

In some embodiments, the handling robot 10 may be an automatic handling device or a carrier handling device, which can be used to transport the movable carrier 20, such as transporting the movable carrier 20 carrying to-be-seeded goods to a docking area of the target workstation 40, or removing the movable carrier 20 from the docking area of the target workstation 40. The to-be-seeded goods are goods determined according to an order and required to be seeded.

Illustratively, the handling robot 10 may be an automatic guided vehicle. The handling robot 10 can travel under the movable carrier 20, then lift the movable carrier 20 upward, thereby supporting and moving the movable carrier 20.

In some embodiments, the movable carrier 20 may include a plurality of storage positions for placing containers 21 of to-be-seeded goods. The storage positions may have cuboid accommodating spaces, and the plurality of storage positions on the movable carrier 20 can be neatly arranged along length, width, and/or height directions of the movable carrier 20.

In some embodiments, the movable carrier 20 may include at least one layer of partition plates, which divides the movable carrier 20 into at least two layers. Each layer of partition plates of the movable carrier 20 is provided with at least one storage position, and each storage position can accommodate at least one container 21.

It should be noted that the container 21 in embodiments of the present disclosure may be a dedicated matching container for the movable carrier 20, an ordinary cargo box (also referred to as a material box), or a goods package, which is not limited in embodiments of the present disclosure.

In some embodiments, the target carrier 30 may include a plurality of storage positions for placing seeded containers 31 that have completed seeding. Similar to the storage positions of the movable carrier 20, the storage positions of the target carrier 30 may also have cuboid accommodating spaces, and the plurality of storage positions on the target carrier 30 can be neatly arranged along length, width, and/or height directions of the target carrier 30.

Illustratively, the target carrier 30 may also include at least one layer of partition plates, which divides the target carrier 30 into at least two layers. Each layer of partition plates of the target carrier 30 is provided with at least one storage position, and each storage position can accommodate at least one seeded container 31.

In some embodiments, the seeding system 100 may further include a goods-information-input device, which can be used to identify goods on the movable carrier 20.

Illustratively, the goods-information-input device may be a tablet computer, a display device, a scanning device, or the like. The display device may be a device with identification and display functions, such as a camera; and the scanning device may be a scanner, a code scanning gun, a handheld terminal or another device with a scanning function. A user can use the goods-information-input device to identify the to-be-seeded goods, for example, scan a goods identifier on the to-be-seeded goods by using the scanning device to obtain goods information such as a goods name and a goods quantity of the to-be-seeded goods.

In some embodiments, the goods-information-input device may be arranged at a fixed position to have a definite identification range. When the movable carrier 20 is moved into the identification range of the goods-information-input device, such as a scanning range of the scanning device, the goods-information-input device can automatically scan the to-be-seeded goods on the movable carrier 20 to obtain goods information of the to-be-seeded goods on the movable carrier 20.

In some other embodiments, the user may also hold the goods-information-input device to identify the to-be-seeded goods on the movable carrier 20, or the user may pick up the to-be-seeded goods on the movable carrier 20 and place the to-be-seeded goods within the identification range of the goods-information-input device to scan the to-be-seeded goods on the movable carrier 20, which is not specifically limited in embodiments of the present disclosure.

For example, to facilitate identification of the to-be-seeded goods, the goods-information-input device may be arranged adjacent to the movable carrier 20, such as at a fixed position in the docking area of the target workstation 40.

As a device for processing a goods seeding task in a warehouse or a logistics center, the target workstation 40 can provide a working area for the user to seed goods into a corresponding container according to the order requirement.

Illustratively, the target workstation 40 includes a seeding wall 50 with a plurality of seeding positions 51 and a first container pick-and-place device 60. Each seeding position 51 can be placed with a to-be-seeded container 70, and the to-be-seeded container 70 is used for carrying to-be-seeded goods. That is, the user can seed the to-be-seeded goods carried on the movable carrier 20 into the to-be-seeded container 70 at the seeding position 51 that needs the to-be-seeded goods according to the order requirement.

In some embodiments, each seeding position 51 is provided with an output device 52, which may be a display screen, an electronic label, a speaker, a projection device, or the like. The output device 52 is used to output a seeding quantity of the to-be-seeded goods at the corresponding seeding position 51. For example, when a user performs seeding at the seeding position, the user can seed the to-be-seeded goods into the to-be-seeded container 70 at the seeding position 51 corresponding to the output device 52 according to the seeding quantity output on the output device 52.

In some embodiments, the target workstation 40 may be provided with one output device 52, which can output the seeding quantity of the to-be-seeded goods of each seeding position 51 on the seeding wall 50 of the target workstation 40.

Illustratively, the plurality of seeding positions 51 on the seeding wall 50 can be neatly arranged along length, width, and/or height directions. When all to-be-seeded goods required by the to-be-seeded container 70 at one seeding position 51 are placed therein, the seeding position 51 where this to-be-seeded container 70 is located completes seeding, and at this time, the to-be-seeded container 70 is referred as a seeded container 31.

In some embodiments, the seeded container 31 may be a dedicated matching container for the target carrier 30 and the seeding position 51, which can be placed both on the storage position of the target carrier 30 and the seeding position 51.

In some embodiments, the docking area of the target workstation 40 is arranged at any side or both sides of the seeding wall 50 of the target workstation 40, that is, the docking area of the target workstation 40 may be provided with one docking position or a plurality of docking positions. FIG. 1 schematically illustrates one target workstation 40 having two docking positions. It can be seen that each docking position in the docking area of the target workstation 40 is docked with one movable carrier 20.

As shown in FIG. 1, the seeding wall 50 of the target workstation 40 is arranged at one side of the target workstation 40, and the target carrier 30 can be placed at the other side of the target workstation 40 facing away from the seeding wall 50.

In some embodiments, when the seeding position 51 on the seeding wall 50 completes seeding, the control device can control the first container pick-and-place device 60 of the target workstation 40 to pick up the seeded container 31 from the seeding position 51 and place the seeded container 31 on the target carrier 30.

Illustratively, the first container pick-and-place device 60 may be a mechanical arm, a suction cup, or the like. Taking a suction cup as an example, the first container pick-and-place device 60 can use air pressure to suck the seeded container 31 and transfer the seeded container 31 to the target carrier 30. When the seeded container 31 is moved to the storage position on the target carrier 30, the seeded container 31 can be released, so that the seeded container 31 is placed on the storage position of the target carrier 30.

In some embodiments, the target carrier 30 may be a shelf, which may be a single-sided shelf or a multi-sided shelf, each side of the multi-sided shelf can be provided with a plurality of storage positions, and when the storage positions on one side are fully occupied, the seeded containers can be placed on other sides. For example, the target carrier 30 can be rotated by the handling robot 10, or the user can manually rotate the target carrier 30 for side switching.

It should be noted that the plurality of seeding positions 51 on the seeding wall 50 can be arranged in one layer or a plurality of layers, which is not limited in embodiments of the present disclosure.

In some embodiments, the control device is a device or a tool for monitoring, operating, and adjusting the handling robot 10, the target workstation 40, the goods-information-input device, and the like, and can be used to control and manage various parameters, functions, and operations of the handling robot 10, the target workstation 40, and the goods-information-input device.

Illustratively, the control device can be coupled to the handling robot 10 and the target workstation 40 respectively to control operations of the handling robot 10 and the target workstation 40. For example, the control device can control a movement operation of the handling robot 10 and a handling operation of the movable carrier 20, and can also control the target workstation 40 to perform a seeding task. For another example, the control device can also obtain goods information identified by the goods-information-input device through coupling with the goods-information-input device.

In some embodiments, the control device may be a server or a terminal device, or a device deployed with a warehouse management system (WMS) and a robot management system (RMS). The terminal device may include at least one of a personal computer, a notebook computer, a smart phone, a tablet computer, and a portable wearable device; and the server may include an independent server or a server cluster composed of a plurality of servers, which is not limited in embodiments of the present disclosure.

In some embodiments, the control device is communicatively connected with the handling robot 10 and the target workstation 40 for data communication. For example, the control device can communicate with the handling robot 10 and the target workstation 40 through a local area network (LAN), a wireless local area network (WLAN), or another network.

In some embodiments, the control device can send a handling instruction to the handling robot 10. When receiving the handling instruction, the handling robot 10 transports the movable carrier 20 to the docking area of the target workstation 40 according to the handling instruction.

In some embodiments, after the handling robot 10 transports the movable carrier 20 to the docking area of the target workstation 40, the target workstation 40 can, in response to the movable carrier arriving at the docking area of the target workstation 40, acquire goods information of the to-be-seeded goods on the movable carrier, and determine seeding information of each of the plurality of seeding positions 51 on the seeding wall 50 of the target workstation 40 based on the goods information of the to-be-seeded goods. The seeding information includes the seeding quantity of the to-be-seeded goods at each seeding position 51.

Then, the control device generates an output instruction based on the seeding information and sends the output instruction to the target workstation 40. The target workstation 40 can acquire the output instruction and output the seeding quantity of the to-be-seeded goods at each seeding position 51 according to the output instruction. For example, an electronic label of each seeding position 51 can be controlled to display the seeding quantity of the to-be-seeded goods at the each seeding position 51, or a speaker in the target workstation 40 can be controlled to broadcast the seeding quantity of the to-be-seeded goods at each seeding position 51, so that the user can seed the to-be-seeded goods into the to-be-seeded container at the seeding position 51 according to the seeding quantity corresponding to this seeding position 51.

In some embodiments, during seeding, the control device can acquire the seeding state of each seeding position 51 on the seeding wall 50, such as whether seeding starts, whether seeding is in progress, content and quantity of seeded goods, whether seeding is completed, and the like, and generate a first transfer instruction based on seeding states of the plurality of seeding positions 51, and send the first transfer instruction to the target workstation 40. The target workstation 40 can acquire the first transfer instruction and transfer the seeded container 31 that has completed seeding to the target carrier 30 according to the first transfer instruction.

For example, when the target workstation 40 acquires the first transfer instruction, the first container pick-and-place device 60 can be used to transfer the seeded container 31 that has completed seeding to the target carrier 30.

It should be noted that the seeding system 100 may include a plurality of workstations, each of which can be used to perform a seeding task. The target workstation is any one of the plurality of workstations.

FIG. 2 is a schematic structural diagram of a target workstation according to an embodiment of the present disclosure. The structure and function of the target workstation 40 will be described below with reference to FIG. 2.

As shown in FIG. 2, the target workstation 40 includes a seeding wall 50 and a first container pick-and-place device 60. The seeding wall 50 includes a plurality of seeding positions 51 and an electronic label 52 arranged at each seeding position 51 of the plurality of seeding positions 51.

In some embodiments, the plurality of seeding positions 51 on the seeding wall 50 can be flexibly designed in terms of the number of layers, height, and storage positions according to scenarios and requirements, and can be fixed on the ground or designed to be movable, which is not limited in embodiments of the present disclosure.

In some embodiments, the plurality of seeding positions 51 on the seeding wall 50 can be arranged in one layer or a plurality of layers, each layer including at least one seeding position 51, and each seeding position 51 can be placed with a to-be-seeded container 70 for carrying to-be-seeded goods.

It should be noted that when arranging the electronic label 52, each seeding position 51 can correspond to one electronic label 52, or the plurality of seeding positions 51 can correspond to one electronic label. For example, one electronic label 52 can be arranged between two adjacent seeding positions 51, or one electronic label can be arranged at a front or rear of a layer of seeding positions 51, which is not specifically limited in embodiments of the present disclosure. FIG. 2 illustrates one seeding position 51 corresponding to one electronic label 52 as an example.

In some embodiments, the electronic label 52 is coupled to the control device. The control device sends a display instruction to the electronic label 52 at each seeding position 51 according to the to-be-seeded goods on the movable carrier 20. After acquiring the display instruction, the electronic label 52 can display the seeding quantity of the to-be-seeded goods at the seeding position 51 corresponding to this electronic label 52 according to the display instruction, so that the user can seed the to-be-seeded goods carried on the movable carrier 20 into the to-be-seeded container 70 at the seeding position 51 according to the seeding quantity corresponding to this seeding position 51.

In some embodiments, the first container pick-and-place device 60 is coupled to the control device. When all to-be-seeded goods required by the to-be-seeded container 70 at the seeding position 51 are placed into the to-be-seeded container 70, the seeding position 51 where the to-be-seeded container 70 is located completes seeding, and the first container pick-and-place device 60 moves to the seeding position 51 that has completed seeding through lateral movement and/or vertical movement, and picks up and moves the to-be-seeded container 70 at the seeding position 51.

For example, during seeding of to-be-seeded goods, the control device can generate a first transfer instruction according to the seeding state of each of the plurality of seeding positions 51 on the seeding wall 50, and send the first transfer instruction to the first container pick-and-place device 60. The first container pick-and-place device 60 transfers the seeded container that has completed seeding at the seeding position 51 to the target carrier according to the first transfer instruction.

In some embodiments, after the first container pick-and-place device 60 takes away the to-be-seeded container 70 that has completed seeding at the seeding position 51 (e.g., transfers the to-be-seeded container 70 that has completed seeding to the target carrier),, and the first container pick-and-place device 60 can also move laterally and/or vertically to place a new to-be-seeded container at the idle seeding position 51.

For example, the new to-be-seeded container can be placed on the target carrier or another carrier (such as a movable carrier). Or, a carrier dedicated to placing new to-be-seeded containers that have not been seeded can be docked at a side (i.e., a first side) of the target workstation 40. The first container pick-and-place device 60 can take out the new to-be-seeded container from the carrier and place the new to-be-seeded container at the idle seeding position 51 through lateral movement and/or vertical movement. The new to-be-seeded container can be an empty container or a non-empty container.

For another example, the target carrier can be used to place containers that have completed seeding, and can also be used to place new to-be-seeded containers. For example, when the number of target carriers is one, part of the storage positions on the target carrier are used to place containers that have completed seeding, and the other part of the storage positions on the target carrier are used to place new to-be-seeded containers; or when the number of target carriers is multiple (e.g., two), one target carrier is used to place containers that have completed seeding, and the other target carrier is used to place new to-be-seeded containers, which is not limited in embodiments of the present disclosure.

In some embodiments, the target workstation 40 may be provided with a buffer position (not shown in FIG. 2), which can be used to temporarily store a container. For example, the buffer position can be used to place the to-be-seeded container 70 or the seeded container 31, or an empty container that has not been seeded. After a seeded container 31 is transferred to the target carrier 30, the empty container can be taken down from the buffer position by the first container pick-and-place device 60 of the target workstation 40 and placed at the original seeding position of this seeded container 31.

It should be noted that the above manner of arranging an electronic label at each seeding position of the seeding wall of the target workstation to display the seeding quantity of to-be-seeded goods at the seeding position is only illustrative. According to actual situations, the electronic label can also be arranged at any position of the target workstation or the seeding wall, and the output device of the target workstation can be another device besides the electronic label, such as a display device, a projection device, a speaker, or the like.

To elaborate the seeding control method provided by the present disclosure, the seeding control method provided by embodiments of the present disclosure will be described in detail below with reference to the accompanying drawings.

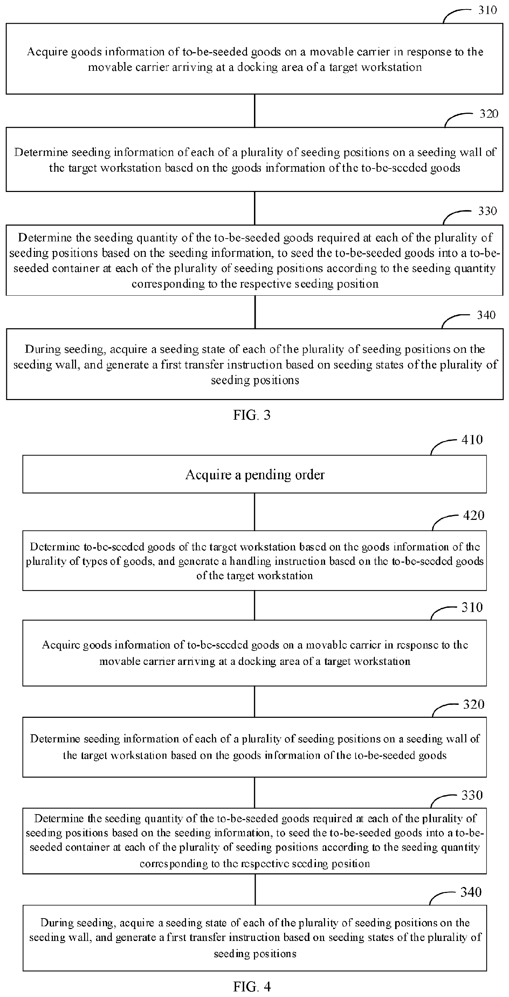

FIG. 3 is a schematic diagram of a seeding control method according to embodiments of the present disclosure, which can be used in the control device in the above embodiments. As shown in FIG. 3, the method includes steps 310 to 340 as follows.

At step 310, goods information of to-be-seeded goods on a movable carrier is acquired in response to the movable carrier arriving at a docking area of a target workstation.

The movable carrier is configured to carry to-be-seeded goods.

Illustratively, one movable carrier can be used to carry one type of to-be-seeded goods or a plurality of types of to-be-seeded goods. The movable carrier can be transported from a goods storage area to a scope of the target workstation by a handling robot or by a user. The to-be-seeded goods can be a cargo, a package, a stock keeping units (SKUs), or the like.

In some embodiments, the goods information of the to-be-seeded goods refers to goods information of the to-be-seeded goods carried on the movable carrier, which can include a goods name, a goods quantity, a goods parameters such as size and weight of the to-be-seeded goods. The to-be-seeded goods are goods required by a pending order.

In some embodiments, the movable carrier can be docked at the docking area of the target workstation, and the docking area can be arranged at any side or a plurality of sides of the target workstation. The user can walk to the docking area of the target workstation to take the to-be-seeded goods from the movable carrier for identification or seeding. As shown in FIG. 1, the docking area of the target workstation 40 can be arranged adjacent to the target workstation 40, and one or more docking positions can be arranged in the docking area, each docking position can be used to place one movable carrier 20.

In some embodiments, the above step 310 can include determining goods information of the to-be-seeded goods on the movable carrier according to task information of each pending seeding task in the seeding system when the movable carrier arrives at the docking area of the target workstation; or, acquiring goods information of the to-be-seeded goods in response to an identification operation of the goods-information-input device on the to-be-seeded goods on the movable carrier when the movable carrier arrives at the docking area of the target workstation.

Illustratively, the control device can assign a pending seeding task to each workstation according to goods information of all to-be-seeded goods and an operating state of each workstation. The task information of the pending seeding tasks can include goods information of the to-be-seeded goods. Then, the control device can schedule the handling robot to transport the movable carrier carrying the to-be-seeded goods to the target workstation. When the control device detects that the movable carrier arrives at the docking area of the target workstation, it can determine goods information of the to-be-seeded goods on the movable carrier corresponding to this target workstation according to task information of all pending seeding tasks.

In some embodiments, the task information of the pending seeding task can also include carrier information of the movable carrier carrying the to-be-seeded goods. In this way, when the control device detects that the movable carrier arrives at the docking area of the target workstation, it can directly determine goods information of the to-be-seeded goods carried on the movable carrier according to the carrier information of the movable carrier.

In some embodiments, a goods-information-input device can also be arranged at the docking area of the target workstation, which can be used to identify the to-be-seeded goods on the movable carrier, the goods-information-input device may be such as a tablet computer, a display device, a scanning device, or the like. The display device can be a device with identification and display functions, such as a camera; and the scanning device can be a scanner, a code scanning gun, a handheld terminal, or other devices with a scanning function.

For example, when the movable carrier arrives at the docking area of the target workstation, the user can use the goods-information-input device, such as a scanning device, to scan the to-be-seeded goods on the movable carrier. The control device can respond to the scanning operation to acquire a goods identifier of the to-be-seeded goods, and obtain goods information of the to-be-seeded goods on the movable carrier according to the goods identifier, such as a goods name, a goods quantity, and a goods parameter.

For another example, when the movable carrier arrives at the docking area of the target workstation, the movable carrier can be automatically or manually moved into the identification range of the goods-information-input device, so that the goods-information-input device can automatically identify the to-be-seeded goods on the movable carrier, thereby obtaining goods information of the to-be-seeded goods on the movable carrier.

Through the above method, the control device can acquire goods information of the to-be-seeded goods on the movable carrier when detecting that the movable carrier arrives at the docking area of the target workstation, providing information support for subsequent seeding of the to-be-seeded goods.

FIG. 4 is a schematic diagram of another seeding control method according to an embodiment of the present disclosure. As shown in FIG. 4, to determine the to-be-seeded goods and transport the to-be-seeded goods to the docking area of the target workstation, before step 310, the method further includes steps 410 to 420 as follows.

At step 410, a pending order is acquired.

A pending order includes goods information of a plurality of types of goods.

Illustratively, a pending order can be a set of goods ordered by a user, which can include a plurality of types of goods, as well as a goods name and a goods quantity of each type of goods, order information such as order time and order account, and the like. When a user places an order online, the control device can acquire the order information in real time and determine the pending order according to the order information, such as a name and a quantity of the ordered goods, and required delivery time.

At step 420, to-be-seeded goods of the target workstation is determined based on the goods information of a plurality of types of goods, and a handling instruction is generated based on the to-be-seeded goods of the target workstation

The handling instruction is configured to instruct the handling robot to transport the movable carrier carrying the to-be-seeded goods to the docking area of the target workstation.

In some embodiments, after acquiring the pending order, the control device can determine goods to be picked and a goods quantity of the goods according to goods information in the pending orders, and determine to-be-seeded goods to be seeded from a plurality of types of goods according to the goods and the goods quantity. For example, goods with the largest goods quantity can be taken as the to-be-seeded goods according to the goods to be picked and the goods quantity. At this time, the to-be-seeded goods to be seeded first are goods with the largest goods quantity among the ordered goods.

Based on this, after the user places an order, the control device can determine the to-be-seeded goods to be seeded according to the pending order, realize scheduling of a seeding sequence of goods, optimize a seeding process of goods to a certain extent, and improve subsequent seeding efficiency.

In the above method, to facilitate acquisition of goods information of the to-be-seeded goods on the movable carrier, in some embodiments, the goods-information-input device can be fixedly arranged in the docking area of the target workstation. For example, a fixing device can be arranged at the docking area, and the goods-information-input device can be installed on the fixing device. When the movable carrier moves to the docking area of the target workstation, the user can take down the goods on the movable carrier and place the goods within an identifiable range of the goods-information-input device for identification.

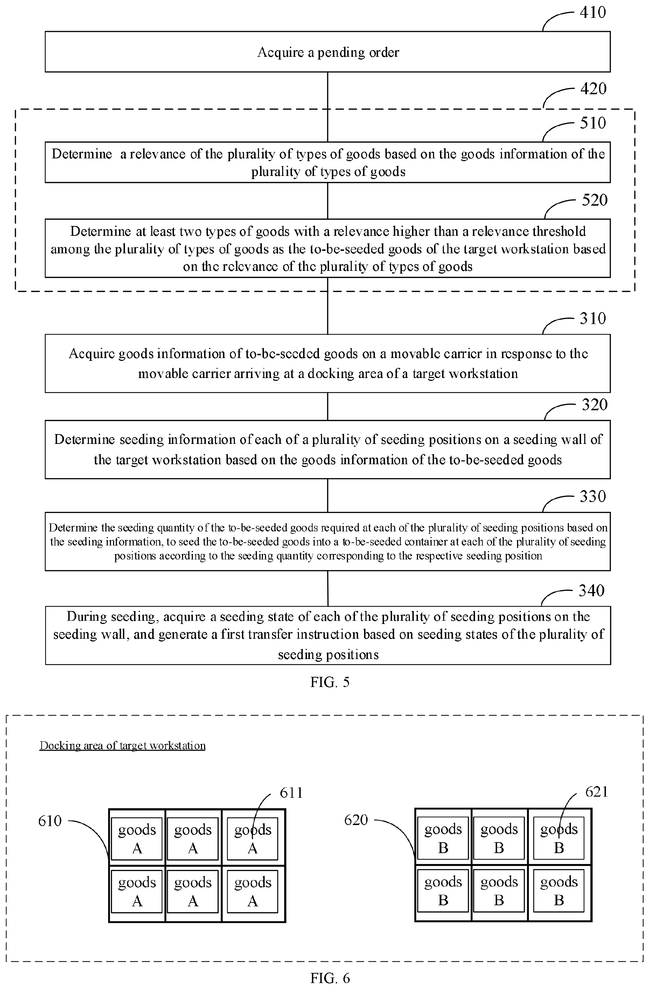

FIG. 5 is a schematic diagram of yet another seeding control method according to an embodiment of the present disclosure. As shown in FIG. 5, the above step 420 can include steps 510 to 520 as follows.

At step 510, a relevance of a plurality of types of goods is determined based on goods information of the plurality of types of goods.

The goods information of a plurality of types of goods can include a goods name, a goods type, a good attribute, a historical purchase quantity, a purchase time, and the like of each type of goods of the plurality of types of goods.

In some embodiments, users have certain ordering rules. For example, users often order related goods at the same time, such as shampoo and hair conditioner. Therefore, to improve seeding efficiency of goods, relevance between the plurality of types of goods can be determined, and then the to-be-seeded goods can be determined based on the relevance between the plurality of types of goods.

In some embodiments, relevance between any two different types of goods among the plurality of types of goods can be determined according to a goods name and a historical purchase quantity of each type of goods. For example, for goods A and goods B, relevance between goods A and goods B can be calculated by a formula of relevance = a quantity of goods A and goods B purchased at the same time / a total sales quantity of goods A.

In some other embodiments, relevance between goods can also be directly determined according to goods attributes. For example, for two types of goods whose goods attributes are both kitchen cleaning supplies, relevance between these two types of goods can be determined according to attribute relevance thereof. The attribute relevance of goods can be customized according to a type of goods and correlation between the two types of goods.

At step 520, at least two types of goods with a relevance higher than a relevance threshold among the plurality of types of goods is determined as the to-be-seeded goods of the target workstation based on the relevance of the plurality of types of goods

In some embodiments, the relevance threshold can be set by a user according to actual needs and goods types. For example, the relevance threshold can be set to 80% or 90%. The relevance thresholds for different types of goods can be the same or different, which is not specifically limited in embodiments of the present disclosure.

Illustratively, according to the relevance between a plurality of types of goods, at least two types of goods with relevance higher than the relevance threshold can be determined as to-be-seeded goods of the target workstation. For example, when the relevance threshold between goods type A and goods type B is 80%, if relevance between goods 1 belonging to goods type A and goods 2 belonging to goods type B is 85%, goods 1 and goods 2 can be determined as to-be-seeded goods.

Through the above method, a plurality of types of goods with strong relevance of goods type can be seeded at one workstation according to order information and goods types, making seeding requirements of each workstation the same or similar, reducing a situation that one type of to-be-seeded goods only needs to be seeded at a small number of seeding positions of the workstation, and improving overall seeding efficiency of the workstation.

In some embodiments, during seeding, if a working area provided by the target workstation is large, it can support a plurality of users to perform seeding at the same time. Therefore, in some embodiments, the movable carrier can include at least a first carrier and a second carrier, and the to-be-seeded goods of the target workstation include at least a first to-be-seeded goods and a second to-be-seeded goods.

FIG. 6 is a schematic diagram of a docking area of a target workstation according to an embodiment of the present disclosure. As shown in FIG. 6, two movable carriers are docked at the docking area of the target workstation, namely a first carrier 610 and a second carrier 620.

In some embodiments, the first carrier 610 and the second carrier 620 can be carriers with a same structure, and the first carrier 610 and the second carrier 620 can be used to carry different to-be-seeded goods respectively. For example, the first carrier can be used to carry first to-be-seeded goods 611, namely goods A; and the second carrier can be used to carry second to-be-seeded goods 621, namely goods B. The first to-be-seeded goods and the second to-be-seeded goods can be two related types of goods.

Based on this, in some embodiments, the step of generating a handling instruction based on the to-be-seeded goods of the target workstation in the above step 420 includes: generating a first handling instruction based on the first to-be-seeded goods, and generating a second handling instruction based on the second to-be-seeded goods.

The first handling instruction is configured to instruct the handling robot to transport the first carrier carrying the first to-be-seeded goods to a side (i.e., a first side) of the docking area of the target workstation. The second handling instruction is configured to instruct the handling robot to transport the second carrier carrying the second to-be-seeded goods to another side (i.e., a second side) of the docking area of the target workstation.

Illustratively, in the goods storage area, goods are stored on corresponding carriers according to categories. Therefore, the first carrier can be a carrier storing the first to-be-seeded goods, and the second carrier can be a carrier storing the second to-be-seeded goods. In some embodiments, the first to-be-seeded goods can be placed on the first carrier and the second to-be-seeded goods can be placed on the second carrier by a robot or a user.

In some embodiments, the control device can generate a first handling instruction based on the first to-be-seeded goods on the first carrier and send the first handling instruction to the handling robot. After receiving the first handling instruction, the handling robot can drive to a position of the first carrier and transport the first carrier to a side of the docking area of the target workstation. For example, as shown in FIG. 6, the handling robot can transport the first carrier to a left side of the docking area. At the same time, the control device can generate a second handling instruction based on the second to-be-seeded goods on the second carrier and send the second handling instruction to the handling robot. After receiving the second handling instruction, the handling robot can drive to a position of the second carrier and transport the second carrier to another side of the docking area of the target workstation. For example, as shown in FIG. 6, the handling robot can transport the second carrier to a right side of the docking area.

In some embodiments, the handling robot for transporting the first carrier, which is referred to as a first robot, and the handling robot for transporting the second carrier, which is referred to as a second robot, can be a same handling robot or different handling robots.

For example, when the first robot and the second robot are a same robot, after transporting the first carrier from the goods storage area to the docking area of the target workstation, the first robot (or the second robot) can then transport the second carrier from the goods storage area to the docking area of the target workstation. For another example, when the first robot and the second robot are different robots, the first robot and the second robot can transport the first carrier and the second carrier to the docking area of the target workstation simultaneously or successively respectively, which is not limited in embodiments of the present disclosure.

It should be noted that the first robot for transporting the first carrier and the second robot for transporting the second carrier are idle handling robots among a plurality of handling robots. For example, when the first carrier and the second carrier need to be transported at the same time, the first robot and the second robot are different handling robots. If the second carrier is transported after the first carrier is transported, and the first robot is idle after transporting the first carrier, the first robot can continue to transport the second carrier, that is, the second robot for transporting the second carrier and the first robot for transporting the first carrier can be the same handling robot.

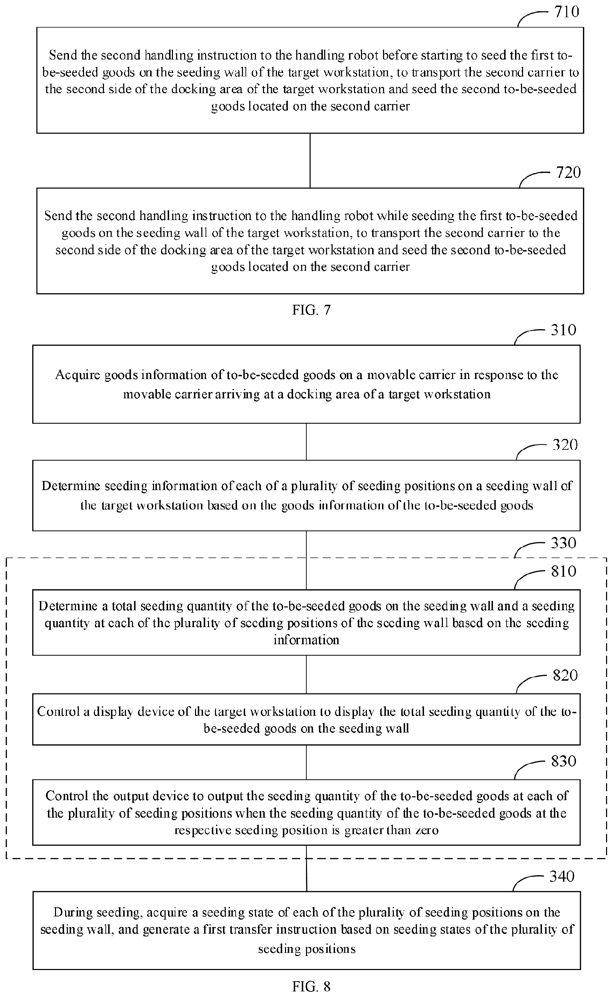

FIG. 7 is a schematic diagram of yet another seeding control method according to some embodiments of the present disclosure. As shown in FIG. 7, the control device can also perform the following step 710 or step 720.

At step 710, the second handling instruction is sent to the handling robot before starting to seed the first to-be-seeded goods on the seeding wall of the target workstation, so as to transport the second carrier to the another side of the docking area of the target workstation and seed the second to-be-seeded goods on the second carrier.

At step 720, the second handling instruction is sent to the handling robot while seeding the first to-be-seeded goods on the seeding wall of the target workstation, so as to transport the second carrier to the another side of the docking area of the target workstation and seed the second to-be-seeded goods on the second carrier.

In some embodiments, when the working area provided by the target workstation is large, the first to-be-seeded goods on the first carrier and the second to-be-seeded goods on the second carrier can be seeded at the same time. Therefore, before starting to seed the first to-be-seeded goods on the seeding wall of the target workstation, the control device can send the second handling instruction to the handling robot, so that the handling robot can transport the second carrier to the another side of the docking area of the target workstation, and continue to seed the second to-be-seeded goods on the second carrier after completing seeding of the first to-be-seeded goods on the first carrier.

In some other embodiments, while seeding the first to-be-seeded goods on the seeding wall of the target workstation, the control device can also send the second handling instruction to the handling robot, so that the handling robot can transport the second carrier to the another side of the docking area of the target workstation, and seed the second to-be-seeded goods on the second carrier after completing seeding of the first to-be-seeded goods on the first carrier, or other users can seed the second to-be-seeded goods on the second carrier while seeding the first to-be-seeded goods on the first carrier.

In some embodiments, timing for the control device to send the second handling instruction to the handling robot can be determined by the control device according to an idle degree of all handling robots. For example, when all handling robots are in a working state, it is necessary to wait until an idle handling robot appears, and then send the second handling instruction to the idle handling robot, so that the idle handling robot can transport the second carrier to the another side of the docking area of the target workstation according to the second handling instruction to seed the second to-be-seeded goods on the second carrier.

In some embodiments, for the first to-be-seeded goods on the first carrier and the second to-be-seeded goods on the second carrier, when the first to-be-seeded goods required by the seeding positions on the seeding wall are all seeded, the first to-be-seeded goods no longer need to be seeded. At this time, the control device can generate a third handling instruction and send the third handling instruction to the handling robot, so that the handling robot can transport the first carrier carrying the first to-be-seeded goods away from the target workstation. For example, the first carrier can be transported to the goods storage area to place a next type of to-be-seeded goods.

It should be noted that the above handling robot also refers to an idle handling robot, not a specific handling robot.

To improve seeding efficiency, in some embodiments, the control device can also determine to-be-seeded goods corresponding to a target seeding position with a smallest number of types of to-be-seeded goods according to the number of types of to-be-seeded goods corresponding to each seeding position on the seeding wall, determine a movable carrier carrying the to-be-seeded goods corresponding to the target seeding position, and generate a carrier handling instruction based on the movable carrier.

The carrier handling instruction is configured to instruct the handling robot to transport the movable carrier carrying the to-be-seeded goods corresponding to the target seeding position to the docking area of the target workstation.

In some embodiments, on the seeding wall of the target workstation, each seeding position may require one or more types of to-be-seeded goods. To make the seeding position with a smallest number of types of goods complete seeding first, the control device can determine the target seeding position with the smallest number of types of to-be-seeded goods and to-be-seeded goods corresponding to this target seeding position according to the number of types of to-be-seeded goods corresponding to each seeding position on the seeding wall. Then, the control device can generate a carrier handling instruction according to the movable carrier carrying the to-be-seeded goods corresponding to the target seeding position, so that the handling robot can transport the movable carrier carrying the to-be-seeded goods corresponding to the target seeding position to the docking area of the target workstation.

Thus, in a subsequent seeding process, the user can preferentially seed the seeding position with the smallest number of types of goods to complete its seeding as soon as possible, and then the control device can control the target workstation to replace the seeded container at the completed seeding position, thereby improving seeding efficiency of the seeding position.

At step 320, seeding information of each seeding position of the plurality of seeding positions on the seeding wall of the target workstation is determined based on goods information of the to-be-seeded goods.

The seeding information of each seeding position includes a seeding quantity of the to-be-seeded goods at the seeding position.

In some embodiments, according to goods information such as a goods name and a goods quantity of the to-be-seeded goods on the movable carrier, the control device can determine seeding information of the to-be-seeded goods at each seeding position on the seeding wall of the target workstation, such as a goods quantity of the to-be-seeded goods at each seeding position. Therefore, a seeding task of the to-be-seeded goods on the movable carrier can be refined and allocated to each seeding position, facilitating subsequent seeding at each seeding position.

In some embodiments, the seeding quantity of the to-be-seeded goods at each seeding position can be pre-allocated by the control device according to order information.

For example, the to-be-seeded container placed at each seeding position on the seeding wall of the target workstation can correspond to one order. Based on this, when determining the goods quantity of the to-be-seeded goods at each seeding position, the control device can bind the to-be-seeded container with one order in a unit of one order per user according to the order information, and determine the seeding quantity of the to-be-seeded goods in the to-be-seeded container at each seeding position according to the to-be-seeded goods and the goods quantity ordered by the user, so as to obtain the seeding quantity of the to-be-seeded goods at each seeding position.

In some embodiments, orders corresponding to the to-be-seeded container at each seeding position can be the same or different. That is, the to-be-seeded container at each seeding position can correspond to one order respectively, or the to-be-seeded containers at the plurality of seeding positions can correspond to a same order. For example, when a quantity of goods required by an order is small and can be accommodated in one to-be-seeded container, the order can be associated with the to-be-seeded container at one seeding position. When a quantity of goods required by an order is large and cannot be accommodated in one to-be-seeded container, the order can be associated with the to-be-seeded containers at the plurality of seeding positions. When all of the plurality of to-be-seeded containers complete seeding, it indicates that the order has been seeded.

At step 330, the seeding quantity of the to-be-seeded goods required at each seeding position is determined based on the seeding information, so as to seed the to-be-seeded goods into a to-be-seeded container at each of the plurality of seeding positions according to the seeding quantity corresponding to the respective seeding position.

For example, after determining the seeding information, the control device can determine the seeding quantity of the to-be-seeded goods required at each seeding position according to the seeding information, and control the target workstation to output the seeding quantity of the to-be-seeded goods required at each seeding position, so that a seeding device of the target workstation or a user can seed the to-be-seeded goods into the to-be-seeded container at each seeding position according to the seeding quantity corresponding to each seeding position.

In some embodiments, after determining the seeding quantity of the to-be-seeded goods at each seeding position, the control device can generate a display instruction and send the display instruction to the target workstation, so that the output device such as an electronic label and a display device at each seeding position on the seeding wall of the target workstation displays the seeding quantity of the to-be-seeded goods at the corresponding seeding position according to the display instruction.

For example, there are 10 seeding positions on the seeding wall of the target workstation, and these 10 seeding positions are arranged in one layer. For to-be-seeded goods A, seeding quantities at these 10 seeding positions are 1, 2, 3, 2, 1, 2, 5, 0, 0, and 1 respectively. The control device can generate a display instruction, which can include identification information of the seeding wall of the target workstation, identification information of each seeding position on the seeding wall, and the seeding quantity of the to-be-seeded goods A at each seeding position.

After receiving the display instruction, the target workstation can analyze the display instruction, determine the seeding quantity of the to-be-seeded goods at each seeding position, and control the electronic label at each seeding position to display the corresponding seeding quantity. For the 10 seeding positions in the above example, the electronic labels at the 10 seeding positions can display A:1, A:2, A:3, A:2, A:1, A:2, A:5, A:0, A:0, A:1 in sequence, where A is a goods identifier of the to-be-seeded goods, and the number represents the seeding quantity of the to-be-seeded goods at the seeding position.

To facilitate the user to seed the to-be-seeded goods according to the seeding quantity corresponding to each seeding position, the target workstation can be provided with an output device for outputting the seeding quantity corresponding to the to-be-seeded goods. For example, the output device can be a display device, an electronic label, a projection device, a speaker, or the like.

According to a type of the output device, the output device can be arranged at any position on the target workstation, the seeding wall of the target workstation, and the plurality of seeding positions on the seeding wall of the target workstation, and the number of output devices can be one or more.

Illustratively, the output device can be arranged at the target workstation, such as a display device, a speaker, a projection device, or the like, which can be used to display the seeding quantity of the to-be-seeded goods required at all seeding positions of the seeding wall of the target workstation; or the output device can also be arranged on the seeding wall to output the seeding quantity of the to-be-seeded goods required at all seeding positions of the seeding wall.

For another example, the output device can also be arranged at the plurality of seeding positions, such as one output device per seeding position, and each output device outputs the seeding quantity of the to-be-seeded goods required at the corresponding seeding position; or a plurality of seeding positions share one output device, such as one output device providing for one layer of seeding positions, so that the output device can display the seeding quantity of the to-be-seeded goods required at all seeding positions of this layer.

FIG. 8 is a schematic diagram of yet another seeding control method according to an embodiment of the present disclosure. As shown in FIG. 8, the above step 330 can include steps 810 to 830 as follows.

At step 810, a total seeding quantity of the to-be-seeded goods on the seeding wall and a seeding quantity at each seeding position of the plurality of seeding positions of the seeding wall are determined based on the seeding information.

In some embodiments, according to the seeding information, the control device can extract the total seeding quantity of the to-be-seeded goods on the seeding wall and the seeding quantity of the to-be-seeded goods at each seeding position, so as to determine a total quantity of to-be-seeded goods required by the seeding wall, which seeding position needs to be seeded with to-be-seeded goods, how many to-be-seeded goods need to be seeded, and which seeding position does not need to be seeded with to-be-seeded goods.

At step 820, a display device of the target workstation is controlled to display the total seeding quantity of the to-be-seeded goods on the seeding wall.

The display device can be a device with a display function on the target workstation or a device with a display function arranged in an area where the target workstation is located.

For example, the control device can send a display instruction to the display device, so that the display device can display the total seeding quantity of the to-be-seeded goods on the seeding wall.

In some embodiments, the display device can also be used to display working information of the target workstation, such as running time of the target workstation and a seeding state of each seeding position.

At step 830, the output device is controlled to output the seeding quantity of the to-be-seeded goods at each of the plurality of seeding positions when the seeding quantity of the to-be-seeded goods at the respective seeding position is greater than zero.

In some embodiments, when the seeding quantity of the to-be-seeded goods at the seeding position is greater than zero, it indicates that the seeding position needs to be seeded with to-be-seeded goods. Therefore, to facilitate user seeding, the control device can generate an output instruction to make the output device of the target workstation output the seeding quantity of the to-be-seeded goods at this seeding position. For example, the control device can generate a display instruction to control the electronic label at this seeding position of the target workstation to light up and display the seeding quantity of the to-be-seeded goods at this seeding position according to the display instruction; or the control device can also generate a sound instruction to make the speaker of the target workstation broadcast the seeding quantity of the to-be-seeded goods at each seeding position with the seeding quantity greater than zero according to the sound instruction.

It should be noted that the seeding quantity of the to-be-seeded goods at each seeding position output by the output device serves as a seeding prompt to help the user seed the to-be-seeded goods according to the seeding quantity.

In some embodiments, when the seeding quantity of the to-be-seeded goods at the seeding position is zero, it indicates that the seeding position does not need to be seeded with to-be-seeded goods. Therefore, to reduce interference to user caused by output information of the output device, the output device can be controlled not to output the seeding quantity of the to-be-seeded goods at this seeding position. For example, the electronic label at this seeding position can be controlled to keep off, or the speaker of the target workstation can be controlled not to broadcast the seeding quantity of the to-be-seeded goods at this seeding position.

For example, taking the output device as an electronic label, when it is determined that the seeding quantity of the to-be-seeded goods at the seeding position is zero, the control device can not send an instruction to the electronic label at this seeding position to keep the electronic label off, or can send an off instruction to the electronic label at this seeding position to change the electronic label at this seeding position from a lit state to an off state or keep the electronic label off.

Through the above method, the output device can be controlled to output the seeding quantity at each seeding position that needs to be seeded with to-be-seeded goods according to the seeding quantity of the to-be-seeded goods at each seeding position, and the output device at each seeding position that do not need to be seeded with to-be-seeded goods are in a silent state, providing indication information for the user to seed the to-be-seeded goods, thereby facilitating user seeding and improving seeding efficiency.

In some embodiments, during seeding, the user can manually seed the to-be-seeded goods on the movable carrier to each seeding position of the seeding wall, or an automatic seeding device can seed the to-be-seeded goods carried on the movable carrier to each seeding position of the seeding wall. The automatic seeding device can have a visual perception system and/or a sound perception system, or the like. The automatic seeding device can identify the to-be-seeded goods and the seeding quantity output by the output device, and can seed the to-be-seeded goods to the corresponding seeding position according to the seeding quantity of the seeding position.

For example, the automatic seeding device can be a seeding robot, which seeds the to-be-seeded goods on the movable carrier to each seeding position of the seeding wall. The seeding robot has a visual perception system and a sound perception system, or the like, which can identify the to-be-seeded goods and the seeding quantity output by the output device, and can seed the to-be-seeded goods to the corresponding seeding position according to the seeding quantity. For another example, the automatic seeding device can also be a mechanical arm arranged at the target workstation, which can transport the picked to-be-seeded goods to the seeding wall and deliver the picked to-be-seeded goods to the to-be-seeded container at the corresponding seeding position. A specific structure of the automatic seeding device is not limited in embodiments of the present disclosure. It should be noted that embodiments of the present disclosure are described by taking manual seeding as an example.

In some embodiments, the target workstation can be used to seed a plurality of types of to-be-seeded goods. During seeding, each type of to-be-seeded goods can be seeded sequentially according to the type of to-be-seeded goods.

Illustratively, assuming that the to-be-seeded goods of the target workstation include a first to-be-seeded goods and a second to-be-seeded goods, to improve seeding efficiency, a seeding direction of the first to-be-seeded goods on the seeding wall is a first direction, a seeding direction of the second to-be-seeded goods on the seeding wall is a second direction, and the first direction is different from the second direction.

For example, taking the first direction as a left-to-right direction and the second direction as a right-to-left direction, the first to-be-seeded goods are goods A, and the second to-be-seeded goods are goods B. Goods A are placed on the first carrier at a side of the target workstation, and goods B are placed on the second carrier at another side of the target workstation. Then the user can seed goods A from left to right, and after completing seeding goods A, the user can seed goods B from right to left until all goods B are seeded.

In some embodiments, two users can seed goods A from left to right and goods B from right to left respectively to improve seeding efficiency of goods.

It should be noted that the above first direction and second direction are illustrative. According to actual seeding requirements, the first direction can also be a right-to-left direction, and the second direction can also be a left-to-right direction.

When each seeding position on the seeding wall has a plurality of layers, the first direction can also be a zigzag seeding direction from left to right on a first layer and right to left on a second layer, and so on, and the second direction can be a zigzag seeding direction from right to left on the first layer and left to right on the second layer, and so on, which is not specifically limited in embodiments of the present disclosure.

At step 340, during seeding, a seeding state of each of the plurality of seeding positions on the seeding wall acquired, and a first transfer instruction is generated based on seeding states of the plurality of seeding positions.

The first transfer instruction is configured to instruct the target workstation to transfer the seeded container with completed seeding to a target carrier. For example, the first transfer instruction can include information of the target workstation, information of the seeding position that has completed seeding on the seeding wall of the target workstation, and information of the seeded container at the seeding position that has completed seeding.

In some embodiments, during seeding, the control device can monitor the seeding state of each seeding position on the seeding wall in real time, such as whether seeding starts, a goods quantity of seeded to-be-seeded goods, whether seeding is completed, and the like. Then, according to the seeding state of each of the plurality of seeding positions, the control device determines seeding positions that have completed seeding and seeded containers at these seeding positions, generates a first transfer instruction, and sends the first transfer instruction to the target workstation, so that the target workstation can transfer the seeded containers that have completed seeding to the target carrier.

Illustratively, when the target workstation receives the first transfer instruction, it can control the first container pick-and-place device to move laterally and/or vertically to reach the seeding position where the seeded container that has completed seeding is located, pick up the seeded container that has completed seeding, and transfer the seeded container to an idle storage position of the target carrier.

In this way, goods seeding based on the target workstation can be realized, and a whole seeding process, such as seeding the to-be-seeded goods into the to-be-seeded containers at the seeding positions and transferring the seeded containers that have completed seeding to the target carrier, has a high degree of automation, so that goods seeding efficiency can be improved and seeding cost can be reduced.

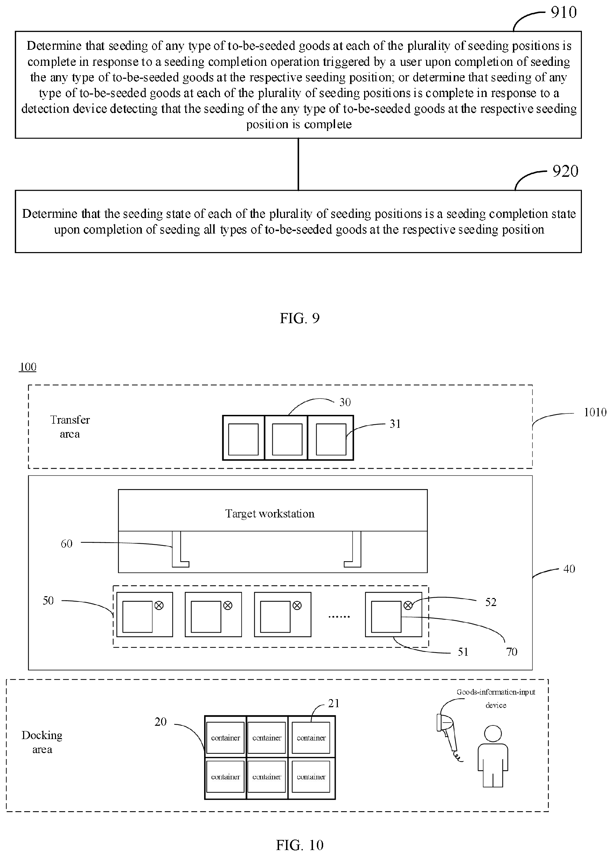

FIG. 9 is a schematic diagram of yet another seeding control method according to an embodiment of the present disclosure. As shown in FIG. 9, acquiring the seeding state of each seeding position on the seeding wall in step 340 can include steps 910 and 920 as follows.

At step 910, it is determined that seeding of any type of to-be-seeded goods at each of the plurality of seeding positions is complete in response to a seeding completion operation triggered by a user upon completion of seeding the any type of to-be-seeded goods at the respective seeding position; or it is determined that seeding of any type of to-be-seeded goods at each of the plurality of seeding positions is complete in response to a detection device detecting that the seeding of the any type of to-be-seeded goods at the respective seeding position is complete.

The target workstation can be used to seed a plurality of types of to-be-seeded goods, and the user can seed each type of to-be-seeded goods sequentially.

In some embodiments, during seeding, the control device can monitor the seeding state of each seeding position in real time. Illustratively, each seeding position can be provided with a control button. When the user completes seeding of any type of to-be-seeded goods at the seeding position, the user can press the control button at this seeding position to trigger a seeding completion operation. The control device responds to the seeding completion operation to determine that the to-be-seeded goods at the seeding position triggering the seeding completion operation have been seeded at the seeding position. Completing seeding of any type of to-be-seeded goods at a seeding position means that all to-be-seeded goods of that type required by this seeding position have been placed into the to-be-seeded container at this seeding position.

In some embodiments, each seeding position can be provided with a detection device, which can detect goods information such as a goods identifier, a goods quantity, a goods weight, and the like of goods placed in the to-be-seeded container at the seeding position, and send the goods information to the control device, so that the control device can determine whether the corresponding seeding position has completed seeding according to the received goods information. When it is determined that the seeding position has completed seeding of any type of to-be-seeded goods, it is determined that any type of to-be-seeded goods at this seeding position has been seeded.

At step 920, it is determined that the seeding state of each of the plurality of seeding positions is a seeding completion state upon completion of seeding all types of to-be-seeded goods at the respective seeding position.

In some embodiments, according to whether each seeding position has completed seeding of each type of to-be-seeded goods, it can be further determined whether each seeding position has completed seeding of all types of to-be-seeded goods.

For example, when there are 2 types of to-be-seeded goods, namely goods A and goods B, the control device can sequentially monitor the seeding state of each seeding position to determine whether each seeding position has completed seeding of goods A and goods B. If the seeding position has completed seeding of goods A and goods B, it means that this seeding position has completed seeding, and the seeding state of this seeding position can be updated to a seeding completion state.

In some embodiments, when all seeding positions on the seeding wall have completed seeding of all types of to-be-seeded goods, it indicates that the seeding state of the seeding wall is a seeding completion state.

Therefore, the seeding state of each seeding position can be determined through a control button or a detection device at the each seeding position on the seeding wall, and consequently, it can be judged whether each seeding position has completed seeding of one type of to-be-seeded goods and all types of to-be-seeded goods, realizing seeding monitoring of each seeding position.

To facilitate synchronizing the seeding state of each seeding position, in some embodiments, step 910 can include: upon completion of seeding any type of to-be-seeded goods at each of the plurality of seeding positions, determining that seeding of the any type of to-be-seeded goods at the respective seeding position is complete in response to the seeding completion operation triggered by the user on a seeding control device at the respective seeding position, or determining that seeding of the any type of to-be-seeded goods at the respective seeding position is complete in response to the seeding completion operation triggered by the user on a control corresponding to the respective seeding position on a display screen of an electronic device.

That is to say, during the user's seeding process, if any type of to-be-seeded goods is seeded at a certain seeding position, for example, a quantity of to-be-seeded goods A required by the seeding position 1 is 3, when the user places 3 to-be-seeded goods into the to-be-seeded container at seeding position 1, the seeding position 1 completes seeding of to-be-seeded goods A. At this time, the user can trigger a seeding completion operation through the seeding control device at the seeding position 1, such as a seeding button, a seeding display, or the like. For example, each seeding position is provided with a seeding button, and the user can press the seeding button at the seeding position to trigger a seeding completion operation at the seeding position.

Illustratively, the user can control the target workstation through an electronic device. For example, the electronic device has a display screen, which can display information of each seeding position and operation controls of each seeding position, such as a to-be-seeded goods viewing control, a seeding quantity setting control, a seeding state setting control, and the like. When any type of to-be-seeded goods is seeded at the seeding position, such as seeding position 1 completing seeding of to-be-seeded goods A, the user can set the seeding-state setting control corresponding to seeding position 1 on the display screen of the electronic device, such as changing display of "seeding in progress" to "seeding completed" to trigger a seeding completion operation.

After receiving the seeding completion operation, the control device can synchronously learn the seeding state of the seeding position, such as determining that the to-be-seeded goods A at seeding position 1 triggering the seeding completion operation have been seeded.

In some embodiments, the control device can also control the output device of the target workstation to stop displaying the seeding quantity of any type of to-be-seeded goods at the seeding position when any type of to-be-seeded goods at this seeding position is seeded. For example, when the control device determines that the user has completed seeding one type of to-be-seeded goods A at the seeding position, the control device may generate a display stop instruction and send the display stop instruction to the target workstation, so that the target workstation controls the electronic label at this seeding position to be turned off.

In some embodiments, the control device may further control the output device of the target workstation to play the seeding quantity of other types of to-be-seeded goods at the seeding position when any type of to-be-seeded goods at the seeding position is seeded, so that the user can seed other types of to-be-seeded goods into the seeding position according to the corresponding seeding quantity.

For example, when the control device detects that seeding position 1 has completed seeding of the type of to-be-seeded goods A, the control device may generate a play control instruction and send the play control instruction to the target workstation, so that the target workstation controls a speaker to start playing the seeding quantity of another type of to-be-seeded goods B required by seeding position 1.

In some embodiments, after the output device stops outputting the seeding quantity of the to-be-seeded goods at each seeding position, the control device may, in response to the movable carrier carrying the next type of to-be-seeded goods arriving at the docking area of the target workstation, acquire goods information of the next type of to-be-seeded goods, and determine seeding information of each seeding position on the seeding wall of the target workstation based on the goods information of the next type of to-be-seeded goods. The seeding information of the seeding position may include the seeding quantity of the next type of to-be-seeded goods at the seeding position. The control device may then determine the seeding quantity of the next type of to-be-seeded goods at each seeding position based on the seeding information, so that the user can seed the next type of to-be-seeded goods according to the seeding quantity thereof at each seeding position.

In some embodiments, the foregoing step 340 may include: generating a first transfer instruction to control a first container pick-and-place device of the target workstation to transfer the seeded container at each of the plurality of seeding positions on the seeding wall to the target carrier when the seeding states of all of the plurality of seeding positions on the seeding wall are seeding completion states.

The first container pick-and-place device of the target workstation may be a robotic arm, a suction cup, or another device having a function of picking and placing seeded containers.

In some embodiments, when all seeding positions on the seeding wall of the target workstation have completed seeding of all to-be-seeded goods, the seeding states of all of the plurality of seeding positions are seeding completion states. At this time, no further seeding operation needs to be performed on the seeding wall. Therefore, the control device may generate a first transfer instruction, and the target workstation may receive the first transfer instruction and control the first container pick-and-place device to transfer the seeded container at each seeding position on the seeding wall to the target carrier according to the first transfer instruction, so as to place and seed new to-be-seeded containers.

In some embodiments, the target carrier may be located at the target workstation or a carrier storage area. For example, to save space and facilitate the travel of other robots in the seeding area, the target carrier is generally placed in a corresponding carrier storage area, and when the seeded containers need to be transported, the target carrier needs to be transported into the working range of the target workstation by a handling robot.

Therefore, in some embodiments, the control device may further generate a first carrier handling instruction when the seeding states of all of the plurality of seeding positions on the seeding wall are updated to seeding completion states, or generate the first carrier handling instruction before the seeding states of all of the plurality of seeding positions on the seeding wall are updated to seeding completion states.

The first carrier handling instruction is configured to instruct the handling robot to transport the target carrier to a transfer area of the target workstation, and the transfer area and the seeding wall are respectively located at two sides of the target workstation.

FIG. 10 is a schematic diagram of another seeding system according to embodiments of the present disclosure. As shown in FIG. 10, the transfer area 1010 and the seeding wall 50 are respectively disposed at front and rear sides of the target workstation 40, and the target carrier 30 is docked in the transfer area 1010. The target carrier 30 may include a carrier located at the target workstation or a carrier located at a carrier storage area.

In some embodiments, the control device may generate a first carrier handling instruction when the seeding states of all of the plurality of seeding positions on the seeding wall are updated to seeding completion states; or to reduce waiting time of the target workstation, the control device may generate the first carrier handling instruction before the seeding states of all of the plurality of seeding positions on the seeding wall are updated to seeding completion states. The first carrier handling instruction may include an identifier of the handling robot, a start position and a target position of the target carrier, and a driving route for handling the target carrier.

After the control device sends the first carrier handling instruction to the corresponding handling robot, the handling robot may, in response to the first carrier handling instruction, drive to the start position of the target carrier and transport the target carrier to the transfer area 1010 of the target workstation, so that the container pick-and-place device of the target workstation transfers the seeded containers that have completed seeding to the target carrier 30.

In the foregoing method, when the seeded containers need to be transferred, the control device schedules an idle handling robot to transport the target carrier to the transfer area of the target workstation. Therefore, during the entire seeding process, the transfer area is only occupied for a short period of time, and can be released at other times to save space.

In some embodiments, if the transfer of the seeded containers at all seeding positions on the seeding wall is performed after waiting for the seeding states of all of the plurality of seeding positions on the seeding wall to be updated to seeding completion states, the seeded container at the seeding position whose seeding state is updated to the seeding completion state early will wait for a long time to be transferred, causing this seeding position to be occupied for a long time and low seeding efficiency.

To reduce the waiting time of the seeded container, in some embodiments, step 340 may also be implemented in the following manner. When the seeding state of any one of the plurality of seeding positions on the seeding wall is a seeding completion state, a first transfer instruction is generated to control the first container pick-and-place device of the target workstation to transfer the seeded container at the any one of the plurality of seeding positions to the target carrier.

Illustratively, when the seeding state of any one of the plurality of seeding positions on the seeding wall, such as seeding position 2, is updated to a seeding completion state at time t1, the control device may generate a first transfer instruction at time t1, so that the first container pick-and-place device of the target workstation transfers the seeded container at seeding position 2 to the target carrier without waiting for the seeding states of other seeding positions to be updated to seeding completion states. In this way, the container replacement efficiency at the target workstation can be improved, thereby improving the overall seeding efficiency.

In some embodiments, the number of seeded containers that can be stored in the target carrier is limited, and before the target carrier is transported to the transfer area of the target workstation, some containers may have been stored thereon. To ensure that the seeded containers can be safely placed on the target carrier, the control device may further generate a second transfer instruction when the target carrier does not meet the container placement condition.

In some embodiments, the target workstation may be provided with a plurality of buffer positions, some of the plurality of buffer positions may be provided with containers (such as to-be-seeded containers or seeded containers), and the buffer positions provided with containers are referred to as non-idle buffer positions; other buffer positions of the plurality of buffer positions may not be provided with containers, and the buffer positions not provided with containers are referred to as idle buffer positions. When there is at least one idle buffer position among the plurality of buffer positions and the target carrier does not meet the container placement conditions, the control device may generate a second transfer instruction.

The second transfer instruction is configured to instruct the first container pick-and-place device to transfer the seeded container at any seeding position to a first buffer position of the target workstation. The first buffer position of the target workstation refers to any idle buffer position among the plurality of buffer positions of the target workstation. The container placement condition refers to a condition that needs to be met for placing the seeded container on the target carrier, and the container placement condition may include that the target carrier has been transported to the transfer area of the target workstation and there are idle storage positions on the target carrier.

Illustratively, before transferring the seeded container to the target carrier, the control device may judge whether the target carrier meets the container placement condition. For example, the control device may acquire the position and storage state of the target carrier uploaded by the user through an electronic device, so as to judge whether the target carrier meets the container placement condition, i.e., whether the target carrier has been transported to the transfer area of the target workstation and whether there is an idle storage position on the target carrier. If it is determined that the target carrier has been transported to the transfer area of the target workstation and there is idle storage position on the target carrier, it is determined that the target carrier meets the container placement conditions, and the control device may send a first transfer instruction to the target workstation to transfer the seeded container to the idle storage position of the target carrier.

On the contrary, if the target carrier is not transported to the transfer area of the target workstation, or there are no idle storage positions on the target carrier, it is determined that the target carrier does not meet the container placement condition, and the control device may send a second transfer instruction to the target workstation, so that the target workstation transfers the seeded container to the first buffer position of the target workstation.

To facilitate the continuation of the seeding task, in some embodiments, the control device may further control the first container pick-and-place device to place a container on a second buffer position or the movable carrier to the idle seeding position corresponding to the seeded container after the first container pick-and-place device transfers the seeded container at the seeding position to the target carrier or the first buffer position.

The second buffer position is a buffer position different from the first buffer position, on which a container is placed. The container on the second buffer position may be a new unseeded container (such as an empty container), or the container on the second buffer position may also be a container that needs to be seeded with to-be-seeded goods.

In some embodiments, a plurality of containers may be placed on the movable carrier. When the handling robot transports the movable carrier to the target workstation, the first container pick-and-place device of the target workstation transports the container thereon to the second buffer position of the target workstation; or, the first container pick-and-place device may also directly transport the container on the movable carrier to the idle seeding position on the seeding wall. For example, the movable carrier may be a target carrier; when the movable carrier is a target carrier, the container transported by the first container pick-and-place device to the idle seeding position may be an unseeded container or a container that needs to be seeded with the to-be-seeded goods corresponding to the target workstation, which is not limited in embodiments of the present disclosure.

That is to say, after the seeded container on the seeding wall is transferred away, the seeding position where the seeded container was originally located enters an idle state. At this time, to continue seeding, the control device may send an instruction to the target workstation, so that the target workstation uses the first container pick-and-place device to take a container on the second buffer position or the movable carrier to the idle seeding position corresponding to the seeded container transferred away.

To improve container replacement efficiency, in some embodiments, the control device may further control a second container pick-and-place device of the target workstation to place a container carried on the second buffer position or the movable carrier to the idle seeding position corresponding to the seeded container when the first container pick-and-place device transfers the seeded container at the seeding position to the target carrier or the first buffer position.

The first container pick-and-place device is different from the second container pick-and-place device.

In some embodiments, at the same time, the control device may control the first container pick-and-place device of the target workstation to transfer the seeded container at the seeding position to the target carrier or the first buffer position, and the first container pick-and-place device is in a working state. At this time, the second container pick-and-place device may place the container carried on the second buffer position or the movable carrier to the idle seeding position corresponding to the seeded container. In this way, the target workstation does not need to wait for the first container pick-and-place device to complete the container picking operation, and the two container pick-and-place devices perform the container picking and container replacement operations at the same time, improving container replacement efficiency.

In some embodiments, in a case that the first container pick-and-place device transfers the seeded container at the seeding position to the target carrier or the first buffer position, if the first container pick-and-place device is in an idle state, the control device may also control the first container pick-and-place device to place the container carried on the second buffer position or the movable carrier to the idle seeding position corresponding to the seeded container.

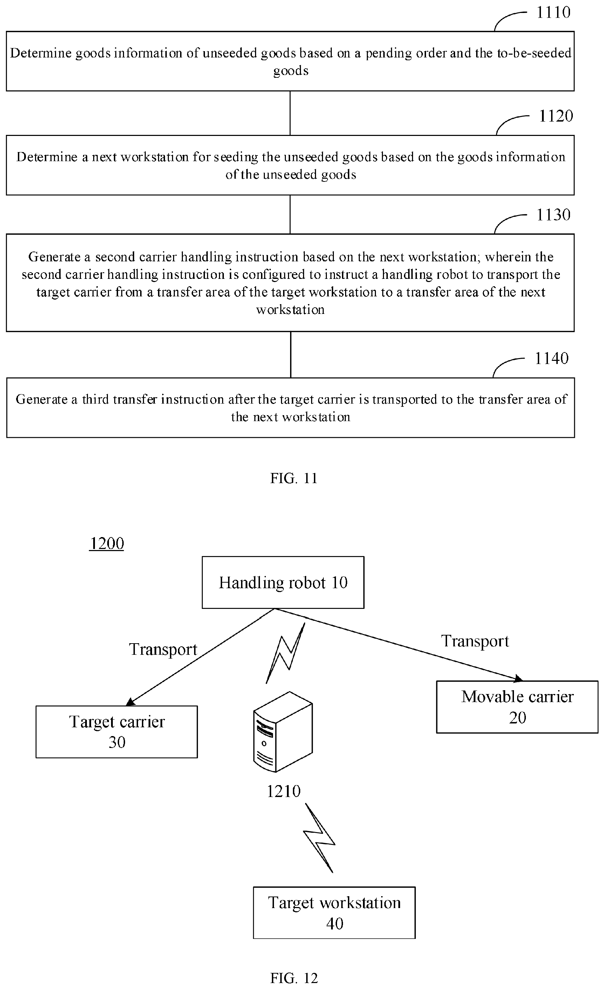

FIG. 11 is a schematic diagram of yet another seeding control method according to embodiments of the present disclosure. As shown in FIG. 11, after the target workstation transfers the seeded container with completed seeding to the target carrier, the method further includes steps 1110 to 1140 as follows.

At step 1110, goods information of unseeded goods is determined based on a pending order and the to-be-seeded goods.

In some embodiments, after completing the seeding of the to-be-seeded goods at all seeding positions, the control device may continue to determine the goods information of the unseeded goods that have not been seeded according to the pending order, such as the goods name, goods quantity of the unseeded goods, and order information related to the unseeded goods.

At step 1120, a next workstation for seeding the unseeded goods is determined based on the goods information of the unseeded goods.

Illustratively, according to the goods information of the unseeded goods, the control device may determine the to-be-seeded goods of each workstation, and determine the workstation whose to-be-seeded goods are the unseeded goods as the next workstation.

At step 1130, a second carrier handling instruction is generated based on the next workstation, where the second carrier handling instruction is configured to instruct the handling robot to transport the target carrier from the transfer area of the target workstation to a transfer area of the next workstation.

For example, the control device may generate a second carrier handling instruction according to the position of the transfer area of the next workstation, and schedule an idle handling robot to transport the target carrier from the transfer area of the target workstation to the transfer area of the next workstation according to the second carrier handling instruction.

At step 1140, a third transfer instruction is generated after the target carrier is transported to the transfer area of the next workstation.

The third transfer instruction is configured to instruct the next workstation to transfer the target container on the target carrier to the idle seeding position of the seeding wall of the next workstation, so as to seed the unseeded goods at the next workstation, and the target container is a container that needs to be seeded with the unseeded goods.

In some embodiments, after the target carrier is transported to the transfer area of the next workstation, the control device may generate a third transfer instruction and send the third transfer instruction to the next workstation, so that the next workstation transfers the target container on the target carrier to the idle seeding position of the seeding wall of the next workstation. In this way, the user can continue to seed the unseeded goods at the next workstation, so that the target container on the target carrier completes the seeding of all to-be-seeded goods.

Through the foregoing method, the control device can schedule the target container to be transferred between different workstations based on the pending orders, realize the seeding of all to-be-seeded goods required by the target container, improve the automation degree of the seeding process, and thereby improve seeding efficiency.

After the target workstation transfers the seeded containers that have completed seeding to the target carrier, in some embodiments, if there are no unseeded goods in the pending orders, it indicates that the seeding of all orders has been completed, and the control device may generate a third carrier handling instruction at this time. The third carrier handling instruction is configured to instruct the handling robot to perform outbound processing on the goods on the target carrier.

That is to say, after the target workstation transfers the seeded containers that have completed seeding to the target carrier, the control device will judge whether the containers on the target carrier need to continue seeding according to the order information and the like. If not, the goods on the target carrier can be directly subjected to outbound processing.

In other words, after the target workstation transfers the seeded containers that have completed seeding to the target carrier, the control device determines whether the containers on the target carrier require further seeding based on the order information and other relevant data. If no further seeding is needed, the goods on the target carrier may be directly processed for outbound.

FIG. 12 is a schematic diagram of still another seeding system according to an embodiment of the present disclosure. As shown in FIG. 12, the seeding system 1200 includes a handling robot 10, a movable carrier 20, a target carrier 30, a target workstation 40, and a control device 1210.

The target workstation 40 includes a seeding wall having a plurality of seeding positions and a first container pick-and-place device, and each of the seeding positions is configured to hold a to-be-seeded container. The movable carrier 20 is configured to carry to-be-seeded goods. The handling robot 10 is configured to transport the movable carrier 20 carrying the to-be-seeded goods to a docking area of the target workstation 40, which may be disposed at any position adjacent to the target workstation 40. The target carrier 30 is configured to carry seeded containers that have completed seeding.

The control device 1210 is configured to: acquire goods information of the to-be-seeded goods on the movable carrier 20 in response to the movable carrier 20 arriving at the docking area of the target workstation 40; determine seeding information of each seeding position on the seeding wall of the target workstation 40 based on the goods information of the to-be-seeded goods, and the seeding information of each of the plurality of seeding positions includes a seeding quantity of the to-be-seeded goods at the respective seeding position; and generate an output instruction based on the seeding information. The goods information of the to-be-seeded goods may include a goods name, a goods quantity, and the like of the to-be-seeded goods carried on the movable carrier 20.

The target workstation 40 is configured to: acquire the output instruction, and output the seeding quantity of the to-be-seeded goods at each of the plurality of seeding positions according to the output instruction, so that a user seeds the to-be-seeded goods into the to-be-seeded container at each of the plurality of seeding positions according to the seeding quantity corresponding to the respective seeding position.

During seeding, the control device 1210 may acquire a seeding state of each of the plurality of seeding positions on the seeding wall, and generate a first transfer instruction based on seeding states of the plurality of seeding positions. The target workstation 40 may acquire the first transfer instruction, and transfer the seeded containers that have completed seeding to the target carrier 30 according to the first transfer instruction.

In some embodiments, the control device 1210 is configured to: when the movable carrier 20 arrives at the docking area of the target workstation 40, determine the goods information of the to-be-seeded goods on the movable carrier 20 according to task information of each pending seeding task in the seeding system, and the task information of the pending seeding task includes goods information of the to-be-seeded goods; or, when the movable carrier 20 arrives at the docking area of the target workstation 40, acquire the goods information of the to-be-seeded goods in response to an identification operation performed by a goods-information-input device on the to-be-seeded goods on the movable carrier 20.

In some embodiments, before acquiring the goods information of the to-be-seeded goods on the movable carrier 20 in response to the movable carrier 20 arriving at the docking area of the target workstation 40, the control device 1210 is further configured to: acquire pending orders, and the pending orders include goods information of a plurality of types of goods; determine to-be-seeded goods of the target workstation 40 based on the goods information of the plurality of types of goods, and generate a handling instruction based on the to-be-seeded goods of the target workstation 40; and the handling instruction is configured to instruct the handling robot 10 to transport the movable carrier 20 carrying the to-be-seeded goods to the docking area of the target workstation 40.

In some embodiments, the control device 1210 is configured to: determine a relevance among the plurality of types of goods based on the goods information of the plurality of types of goods; and determine at least two types of goods having a relevance higher than a relevance threshold among the plurality of types of goods as the to-be-seeded goods of the target workstation 40 based on the relevance among the plurality of types of goods.

The goods information of the plurality of types of goods may include a goods name, a goods type, an attribute, a historical purchase quantity, a purchase time, and the like of each type of goods among the plurality of types of goods.

In some embodiments, the movable carrier 20 includes at least a first carrier and a second carrier, and the to-be-seeded goods of the target workstation 40 include at least a first to-be-seeded goods and a second to-be-seeded goods. The control device 1210 is configured to: generate a first handling instruction based on the first to-be-seeded goods, and the first handling instruction is configured to instruct the handling robot 10 to transport the first carrier carrying the first to-be-seeded goods to a side (i.e., a first side) of the docking area of the target workstation 40; and generate a second handling instruction based on the second to-be-seeded goods, and the second handling instruction is configured to instruct the handling robot 10 to transport the second carrier carrying the second to-be-seeded goods to another side (i.e., a second side) of the docking area of the target workstation 40.

In some embodiments, the control device 1210 is further configured to: send the second handling instruction to the handling robot 10 before starting to seed the first to-be-seeded goods on the seeding wall of the target workstation 40, so as to transport the second carrier to the other side of the docking area of the target workstation 40 and seed the second to-be-seeded goods on the second carrier; or send the second handling instruction to the handling robot 10 while seeding the first to-be-seeded goods on the seeding wall of the target workstation 40, so as to transport the second carrier to the other side of the docking area of the target workstation 40 and seed the second to-be-seeded goods on the second carrier.

In some embodiments, a seeding direction of the first to-be-seeded goods on the seeding wall is a first direction, a seeding direction of the second to-be-seeded goods on the seeding wall is a second direction, and the first direction is different from the second direction.

For example, the first direction is a left-to-right direction, and the second direction is a right-to-left direction. A first user may seed the first to-be-seeded goods on the seeding wall in the left-to-right direction, and a second user may seed the second to-be-seeded goods on the seeding wall in the right-to-left direction.

In some embodiments, the control device 1210 is further configured to: determine to-be-seeded goods corresponding to a target seeding position having a minimum number of types of to-be-seeded goods according to a number of types of to-be-seeded goods corresponding to each seeding position of the plurality of seeding positions on the seeding wall; determine a movable carrier 20 carrying the to-be-seeded goods corresponding to the target seeding position, and generate a carrier handling instruction based on the movable carrier 20; and the carrier handling instruction is configured to instruct the handling robot 10 to transport the movable carrier 20 carrying the to-be-seeded goods corresponding to the target seeding position to the docking area of the target workstation 40.

In some embodiments, the target workstation is provided with an output device configured to output a seeding quantity corresponding to the to-be-seeded goods. The control device 1210 is configured to: determine a total seeding quantity of the to-be-seeded goods on the seeding wall and a seeding quantity at each seeding position of the seeding wall based on the seeding information; control a display device of the target workstation 40 to display the total seeding quantity of the to-be-seeded goods on the seeding wall; and control the output device to output the seeding quantity of the to-be-seeded goods at the seeding position when the seeding quantity of the to-be-seeded goods at the respective seeding position is greater than zero.

In some embodiments, the control device 1210 is configured to: determine that seeding of any type of to-be-seeded goods at each of the plurality of seeding positions is complete in response to a seeding completion operation triggered by a user upon completion of seeding the any type of to-be-seeded goods at the respective seeding position; or determine that seeding of any type of to-be-seeded goods at each of the plurality of seeding positions is complete in response to a detection device detecting that the seeding of the any type of to-be-seeded goods at the respective positon is complete; and determine that the seeding state of each of the plurality of seeding positions is a seeding completion state upon completion of seeding all types of to-be-seeded goods at the respective seeding position.

In some embodiments, the control device 1210 is configured to: upon completion of seeding any type of to-be-seeded goods at each of the plurality of seeding positions, determine that seeding of the any type of to-be-seeded goods at the respective seeding position is complete in response to the seeding completion operation triggered by the user on a seeding control device at the respective seeding position, or determine that seeding of the any type of to-be-seeded goods at the respective seeding position is complete in response to the seeding completion operation triggered by the user on a control corresponding to the respective seeding position on a display screen of an electronic device.

In some embodiments, the control device 1210 is configured to: when seeding states of all of the plurality of seeding positions on the seeding wall are seeding completion states, generate the first transfer instruction to control the first container pick-and-place device of the target workstation 40 to transfer the seeded containers at all seeding positions on the seeding wall to the target carrier 30.

In some embodiments, the control device 1210 is further configured to: generate a first carrier handling instruction when the seeding states of all of the plurality of seeding positions on the seeding wall are updated to seeding completion states; or generate a first carrier handling instruction before the seeding states of all of the plurality of seeding positions on the seeding wall are updated to seeding completion states; and the first carrier handling instruction is configured to instruct the handling robot 10 to transport the target carrier 30 to a transfer area of the target workstation 40, the transfer area and the seeding wall are respectively located at two sides of the target workstation 40, and the target carrier 30 includes a carrier located at the target workstation 40 or a carrier located at a carrier storage area.

In some embodiments, the control device 1210 is configured to: when a seeding state of any one of the plurality of seeding positions on the seeding wall is a seeding completion state, generate the first transfer instruction to control the first container pick-and-place device of the target workstation 40 to transfer the seeded container at the any one of the plurality of seeding positions to the target carrier 30.

In some embodiments, the control device 1210 is further configured to: generate a second transfer instruction when the target carrier 30 does not meet a container placement condition; wherein the second transfer instruction is configured to instruct the first container pick-and-place device to transfer the seeded container at the any one of the plurality of seeding positions to a first buffer position of the target workstation 40.

In some embodiments, the control device 1210 is further configured to: after the first container pick-and-place device transfers the seeded container at the any one of the seeding positions to the target carrier 30 or the first buffer position, control the first container pick-and-place device to place a container carried on a second buffer position or the movable carrier 20 to an idle seeding position corresponding to the seeded container.

In some embodiments, the control device 1210 is further configured to: in a case that the first container pick-and-place device transfers the seeded container at the any one of the plurality of seeding positions to the target carrier 30 or the first buffer position, control a second container pick-and-place device of the target workstation 40 to place a container carried on a second buffer position or the movable carrier 20 to an idle seeding position corresponding to the seeded container; wherein the first container pick-and-place device is different from the second container pick-and-place device, and the first container pick-and-place device and the second container pick-and-place device may be two different robotic arms or suction devices.

In some embodiments, after the target workstation 40 transfers the seeded containers that have completed seeding to the target carrier 30, the control device 1210 is further configured to: determine goods information of unseeded goods based on a pending order and the to-be-seeded goods; determine a next workstation for seeding the unseeded goods based on the goods information of the unseeded goods; generate a second carrier handling instruction based on the next workstation, and the second carrier handling instruction is configured to instruct the handling robot 10 to transport the target carrier 30 from the transfer area of the target workstation 40 to a transfer area of the next workstation; and generate a third transfer instruction after the target carrier 30 is transported to the transfer area of the next workstation; and the third transfer instruction is configured to instruct the next workstation to transfer a target container on the target carrier 30 to an idle seeding position of a seeding wall of the next workstation, so as to seed the unseeded goods at the next workstation, and the target container is a container to be seeded with the unseeded goods.

In some embodiments, after the target workstation 40 transfers the seeded containers that have completed seeding to the target carrier 30, the control device 1210 is further configured to: generate a third carrier handling instruction in a case that there are no unseeded goods in the pending order, and the third carrier handling instruction is configured to instruct the handling robot 10 to perform outbound processing on the goods on the target carrier 30.

It should be noted that the handling robots 10 described above all refer to idle handling robots, not specific handling robots.

In addition, the specific details of each component in the foregoing seeding system have been described in detail in the foregoing method embodiments, and reference may be made to the method embodiments for details not disclosed in the solution, which are not repeated herein.

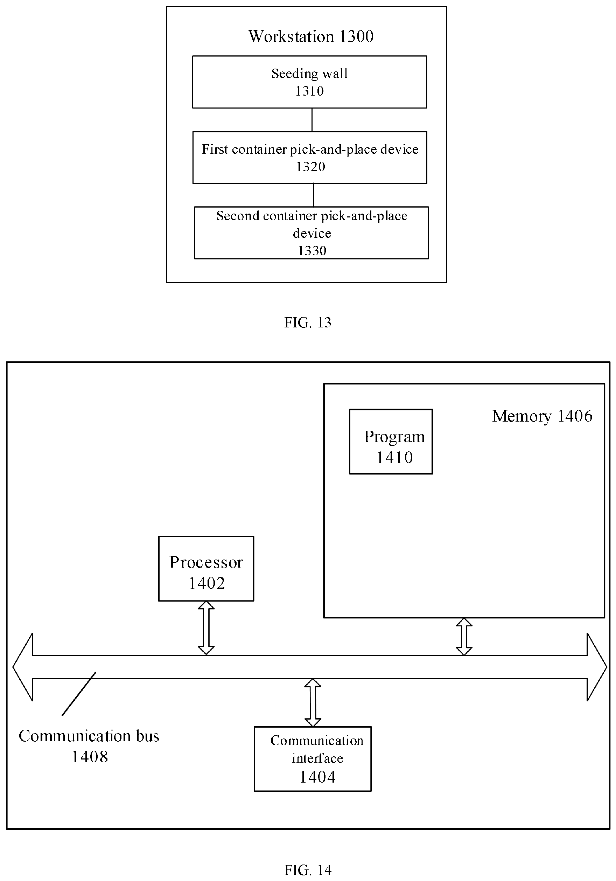

FIG. 13 is a schematic diagram of a workstation according to an embodiment of the present disclosure. As shown in FIG. 13, the workstation 1300 may be the target workstation described in FIG. 1 and FIG. 2. The workstation 1300 includes a seeding wall 1310 and a first container pick-and-place device 1320.

The seeding wall 1310 includes a plurality of seeding positions and an output device disposed at each seeding position. Each of the seeding position is configured to hold a to-be-seeded container. The output device is configured to output a seeding quantity of to-be-seeded goods at a seeding position corresponding to the output device, so that a user seeds the to-be-seeded goods into the to-be-seeded container at each of the plurality of seeding positions according to the seeding quantity corresponding to the respective seeding position.

The first container pick-and-place device 1320 is configured to, during seeding of the to-be-seeded goods, acquire a first transfer instruction, and transfer a seeded container that has completed seeding at each of the plurality of seeding positions to a target carrier based on the first transfer instruction, and the first transfer instruction is generated according to seeding states of the plurality of seeding positions on the seeding wall 1310.

In some embodiments, the workstation 1300 further includes a docking area located at two sides of the seeding wall 1310. The to-be-seeded goods include first to-be-seeded goods and second to-be-seeded goods. A first carrier carrying the first to-be-seeded goods is docked at the docking area on a side (i.e., a first side) of the seeding wall 1310, and a second carrier carrying the second to-be-seeded goods is docked at the docking area on another side (i.e., a second side) of the seeding wall 1310.

In some embodiments, a seeding direction of the first to-be-seeded goods on the seeding wall 1310 is a first direction, a seeding direction of the second to-be-seeded goods on the seeding wall 1310 is a second direction, and the first direction is different from the second direction.

In some embodiments, the workstation 1300 includes a first buffer position, and the first container pick-and-place device 1320 is configured to: acquire a second transfer instruction, and transfer a seeded container at any one of the plurality of seeding positions to the first buffer position of the workstation 1300 according to the second transfer instruction.

In some embodiments, the workstation 1300 further includes a second buffer position, and the first container pick-and-place device 1320 is further configured to: place a container carried on the second buffer position or a movable carrier to an idle seeding position corresponding to the seeded container after transferring the seeded container at the any one of the plurality of seeding positions to the target carrier or the first buffer position.

In some embodiments, the workstation 1300 further includes a second container pick-and-place device 1330. The first container pick-and-place device 1320 is different from the second container pick-and-place device 1330. The second container pick-and-place device 1330 is further configured to: in a case that the first container pick-and-place device 1320 transfers the seeded container at the any one of the plurality of seeding positions to the target carrier or the first buffer position, place the container carried on the second buffer position or the movable carrier to the idle seeding position corresponding to the seeded container.

In some embodiments, each seeding position of the seeding wall 1310 is arranged in a single layer or a plurality of layers. For example, in the target workstation 40 shown in FIG. 2, the seeding wall is of a multi-layer structure, and each layer is provided with four seeding positions.

Illustratively, the seeding wall 1310 may also be arranged in a single layer, and the single-layer seeding positions may be disposed on a movable mechanism and movable up, down, left, and right via the movable mechanism.

The specific details of each component in the foregoing workstation have been described in detail in the foregoing method embodiments, and reference may be made to the method embodiments for details not disclosed in the solution, which are not repeated herein.

FIG. 14 is a schematic diagram of an electronic device according to an embodiment of the present disclosure. The specific implementation of the electronic device is not limited in embodiments of the present disclosure.

As shown in FIG. 14, the electronic device may be a control device such as a server. Specifically, the electronic device includes: a processor 1402, a communication interface 1404, a memory 1406, and a communication bus 1408.

The processor 1402, the communication interface 1404, and the memory 1406 communicate with each other via the communication bus 1408. The communication interface 1404 is configured to communicate with network elements such as a client or other servers. The processor 1402 is configured to execute a program 1410, and specifically may perform relevant steps in the foregoing seeding control method embodiments.

Specifically, the program 1410 may include program code including computer-executable instructions.

The processor 1402 may be a central processing unit (CPU), or an application-specific integrated circuit (ASIC), or one or more integrated circuits configured to implement embodiments of the present disclosure. The electronic device includes one or more processors, which may be processors of the same type, such as one or more CPUs; or processors of different types, such as one or more CPUs and one or more ASICs.

The memory 1406 is configured to store the program 1410. The memory 1406 may include a high-speed RAM memory, and may also include a non-volatile memory, such as at least one magnetic disk memory.

The program 1410 may be specifically invoked by the processor 1402 to cause the electronic device to perform the steps in the foregoing seeding control method.

Embodiments of the present disclosure further provide a computer-readable storage medium having at least one executable instruction stored thereon. When the executable instruction runs on an electronic device/seeding system, the electronic device/seeding system is caused to perform the seeding control method in any one of the foregoing method embodiments.

The executable instructions may be specifically configured to cause the electronic device/seeding system to perform the steps in the foregoing seeding control method.

The algorithms or displays provided herein are not inherently related to any particular computer, virtual system, or other device. Furthermore, embodiments of the present disclosure are not directed to any particular programming language.

In the description provided herein, numerous specific details are set forth. However, it will be understood that embodiments of the present disclosure may be practiced without these specific details. Similarly, for the purpose of streamlining the present disclosure and helping to understand one or more of the various inventive aspects, in the above description of the exemplary embodiments of the present disclosure, various features of embodiments of the present disclosure are sometimes grouped together into a single embodiment, figure, or description thereof. Wherein, the claims following the specific embodiments are hereby expressly incorporated into this specific embodiment, with each claim standing on its own as a separate embodiment of the present disclosure.

It will be appreciated by those skilled in the art that the modules in the device in embodiments may be adaptively changed and disposed in one or more devices different from embodiments. The modules or units or components in embodiments may be combined into one module or unit or component, and furthermore they may be divided into a plurality of sub-modules or sub-units or sub-components. Except that such features and/or processes or units are mutually exclusive at least some of them, there is no other limitation.

It should be noted that the above embodiments are illustrative of the present disclosure rather than limiting, and those skilled in the art may design alternative embodiments without departing from the scope of the appended claims. In the claims, any reference signs placed between parentheses shall not be construed as limiting the claim. The word "comprising/including" does not exclude the presence of elements or steps not listed in a claim. The word "a" or "an" preceding an element does not exclude the presence of a plurality of such elements. The present disclosure may be implemented by means of hardware including several distinct elements, and by means of appropriately programmed computers. In the unit claims enumerating several means, several of these means may be embodied by one and the same item of hardware. The words first, second, third, etc. do not denote any order. These words may be interpreted as names. The steps in the above embodiments should not be construed as limiting the order of execution unless otherwise specified.

## Claims

1. A seeding control method, applied to a control device, comprising:
acquiring goods information of to-be-seeded goods on a movable carrier in response to the movable carrier arriving at a docking area of a target workstation;
determining seeding information of each of a plurality of seeding positions on a seeding wall of the target workstation based on the goods information of the to-be-seeded goods; wherein the seeding information of each of the plurality of seeding positions comprises a seeding quantity of the to-be-seeded goods at the respective seeding position;
determining the seeding quantity of the to-be-seeded goods required at each of the plurality of seeding positions based on the seeding information, to seed the to-be-seeded goods into a to-be-seeded container at each of the plurality of seeding positions according to the seeding quantity corresponding to the respective seeding position;
during seeding, acquiring a seeding state of each of the plurality of seeding positions on the seeding wall, and generating a first transfer instruction based on seeding states of the plurality of seeding positions; wherein the first transfer instruction is configured to instruct the target workstation to transfer a seeded container with completed seeding to a target carrier.

2. The method according to claim 1, wherein acquiring the goods information of the to-be-seeded goods on the movable carrier in response to the movable carrier arriving at the docking area of the target workstation comprises:
determining the goods information of the to-be-seeded goods on the movable carrier according to task information of each pending seeding task in the seeding system; wherein the task information of the pending seeding task comprises the goods information of the to-be-seeded goods when the movable carrier arrives at the docking area of the target workstation; or
acquiring the goods information of the to-be-seeded goods in response to an identification operation of a goods-information-input device on the to-be-seeded goods on the movable carrier when the movable carrier arrives at the docking area of the target workstation.

3. The method according to claim 1, wherein before acquiring the goods information of the to-be-seeded goods on the movable carrier in response to the movable carrier arriving at the docking area of the target workstation, the method further comprises:
acquiring a pending order; wherein the pending order comprises goods information of a plurality of types of goods; and
determining to-be-seeded goods of the target workstation based on the goods information of the plurality of types of goods, and generating a handling instruction based on the to-be-seeded goods of the target workstation; wherein the handling instruction is configured to instruct a handling robot to transport the movable carrier carrying the to-be-seeded goods to the docking area of the target workstation.

4. The method according to claim 3, wherein determining the to-be-seeded goods of the target workstation based on the goods information of the plurality of types of goods comprises:
determining a relevance of the plurality of types of goods based on the goods information of the plurality of types of goods; and
determining at least two types of goods with a relevance higher than a relevance threshold among the plurality of types of goods as the to-be-seeded goods of the target workstation based on the relevance of the plurality of types of goods.

5. The method according to claim 4, wherein the movable carrier comprises at least a first carrier and a second carrier, and the to-be-seeded goods of the target workstation comprise at least a first to-be-seeded goods and a second to-be-seeded goods;
wherein generating the handling instruction based on the to-be-seeded goods of the target workstation comprises:
generating a first handling instruction based on the first to-be-seeded goods, wherein the first handling instruction is configured to instruct the handling robot to transport the first carrier carrying the first to-be-seeded goods to a first side of the docking area of the target workstation; and
generating a second handling instruction based on the second to-be-seeded goods, wherein the second handling instruction is configured to instruct the handling robot to transport the second carrier carrying the second to-be-seeded goods to a second side of the docking area of the target workstation.

6. The method according to claim 5, further comprising:
sending the second handling instruction to the handling robot before starting to seed the first to-be-seeded goods on the seeding wall of the target workstation, to transport the second carrier to the second side of the docking area of the target workstation and seed the second to-be-seeded goods located on the second carrier; or
sending the second handling instruction to the handling robot while seeding the first to-be-seeded goods on the seeding wall of the target workstation, to transport the second carrier to the second side of the docking area of the target workstation and seed the second to-be-seeded goods located on the second carrier.

7. The method according to claim 5, wherein a seeding direction of the first to-be-seeded goods is a first direction, a seeding direction of the second to-be-seeded goods is a second direction, and the first direction is different from the second direction.

8. The method according to claim 1, further comprising:
determining to-be-seeded goods corresponding to a target seeding position with a minimum number of types of to-be-seeded goods according to a number of types of to-be-seeded goods corresponding to each of the plurality of seeding positions on the seeding wall; and
determining the movable carrier carrying the to-be-seeded goods corresponding to the target seeding position, and generating a carrier handling instruction based on the movable carrier; wherein the carrier handling instruction is configured to instruct a handling robot to transport the movable carrier carrying the to-be-seeded goods corresponding to the target seeding position to the docking area of the target workstation.

9. The method according to claim 1, wherein the target workstation has an output device configured to output a seeding quantity corresponding to the to-be-seeded goods; and determining the seeding quantity of the to-be-seeded goods required at each of the plurality of seeding positions based on the seeding information comprises:
determining a total seeding quantity of the to-be-seeded goods on the seeding wall and a seeding quantity at each of the plurality of seeding positions of the seeding wall based on the seeding information;
controlling a display device of the target workstation to display the total seeding quantity of the to-be-seeded goods on the seeding wall; and
controlling the output device to output the seeding quantity of the to-be-seeded goods at each of the plurality of seeding positions when the seeding quantity of the to-be-seeded goods at the respective seeding position is greater than zero.

10. The method according to any one of claims 1-9, wherein acquiring the seeding state of each of the plurality of seeding positions on the seeding wall comprises:
determining that seeding of any type of to-be-seeded goods at each of the plurality of seeding positions is complete in response to a seeding completion operation triggered by a user upon completion of seeding the any type of to-be-seeded goods at the respective seeding position; ordetermining that seeding of any type of to-be-seeded goods at each of the plurality of seeding positions is complete in response to a detection device detecting that the seeding of the any type of to-be-seeded goods at the respective seeding position is complete; and
determining that the seeding state of each of the plurality of seeding positions is a seeding completion state upon completion of seeding all types of to-be-seeded goods at the respective seeding position.

11. The method according to claim 10, wherein determining that seeding of any type of to-be-seeded goods at each of the plurality of seeding positions is complete in response to a seeding completion operation triggered by a user upon completion of seeding the any type of to-be-seeded goods at the respective seeding position comprises:
upon completion of seeding any type of to-be-seeded goods at each of the plurality of seeding positions, determining that seeding of the any type of to-be-seeded goods at the respective seeding position is complete in response to the seeding completion operation triggered by the user on a seeding control device at the respective seeding position, or determining that seeding of the any type of to-be-seeded goods at the respective seeding position is complete in response to the seeding completion operation triggered by the user on a control corresponding to the respective seeding position on a display screen of an electronic device.

12. The method according to claim 10, wherein generating the first transfer instruction based on seeding states of the plurality of seeding positions comprises:
when seeding states of all of the plurality of seeding positions on the seeding wall are seeding completion states, generating the first transfer instruction to control a first container pick-and-place device of the target workstation to transfer the seeded container at each of the plurality of seeding positions on the seeding wall to the target carrier.

13. The method according to claim 12, further comprising:
generating a first carrier handling instruction when the seeding states of all of the plurality of seeding positions on the seeding wall are updated to seeding completion states; or
generating a first carrier handling instruction before the seeding states of all of the plurality of seeding positions on the seeding wall are updated to seeding completion states,
wherein the first carrier handling instruction is configured to instruct the handling robot to transport the target carrier to a transfer area of the target workstation, the transfer area and the seeding wall are respectively located at two sides of the target workstation, and the target carrier comprises a carrier located at the target workstation or a carrier located at a carrier storage area.

14. The method according to claim 10, wherein generating the first transfer instruction based on seeding states of the plurality of seeding positions comprises:
when the seeding state of any one of the plurality of seeding positions on the seeding wall is a seeding completion state, generating the first transfer instruction to control a first container pick-and-place device of the target workstation to transfer the seeded container at the any one of the plurality of seeding positions to the target carrier.

15. The method according to claim 14, further comprising:
generating a second transfer instruction when the target carrier does not meet a container placement condition; wherein the second transfer instruction is configured to instruct the first container pick-and-place device to transfer the seeded container at the any one of the plurality of seeding positions to a first buffer position of the target workstation.

16. The method according to claim 15, further comprising:
after the first container pick-and-place device transfers the seeded container at the any one of the plurality of seeding positions to the target carrier or the first buffer position, controlling the first container pick-and-place device to place a container carried on a second buffer position or the movable carrier to an idle seeding position corresponding to the seeded container.

17. The method according to claim 15, further comprising:
in a case that the first container pick-and-place device transfers the seeded container at the any one of the plurality of seeding positions to the target carrier or the first buffer position, controlling a second container pick-and-place device of the target workstation to place a container carried on a second buffer position or the movable carrier to an idle seeding position corresponding to the seeded container; wherein the first container pick-and-place device is different from the second container pick-and-place device.

18. The method according to any one of claims 1-9, wherein after the target workstation transfers the seeded container with completed seeding to the target carrier, the method further comprises:
determining goods information of unseeded goods based on a pending order and the to-be-seeded goods;
determining a next workstation for seeding the unseeded goods based on the goods information of the unseeded goods;
generating a second carrier handling instruction based on the next workstation; wherein the second carrier handling instruction is configured to instruct a handling robot to transport the target carrier from a transfer area of the target workstation to a transfer area of the next workstation; and
generating a third transfer instruction after the target carrier is transported to the transfer area of the next workstation; wherein the third transfer instruction is configured to instruct the next workstation to transfer a target container on the target carrier to an idle seeding position of a seeding wall of the next workstation, to seed the unseeded goods at the next workstation, and the target container is a container to be seeded with the unseeded goods.

19. The method according to any one of claims 1-9, wherein after the target workstation transfers the seeded container with completed seeding to the target carrier, the method further comprises:
generating a third carrier handling instruction in a case that there are no unseeded goods in a pending order, wherein the third carrier handling instruction is configured to instruct the handling robot to perform outbound processing on the goods on the target carrier.

20. A seeding system, comprising:
a target workstation, wherein the target workstation comprises a seeding wall with a plurality of seeding positions and a first container pick-and-place device, and each of the plurality of seeding positions is configured for placing a to-be-seeded container;
a movable carrier for placing to-be-seeded goods;
a handling robot for transporting the movable carrier carrying the to-be-seeded goods to a docking area of the target workstation;
a target carrier for placing the seeded container with completed seeding; and
a control device configured to:
acquire goods information of the to-be-seeded goods on the movable carrier in response to the movable carrier arriving at the docking area of the target workstation;
determine seeding information of each of the plurality of seeding positions on the seeding wall of the target workstation based on the goods information of the to-be-seeded goods; wherein the seeding information of each of the plurality of seeding positions comprises a seeding quantity of the to-be-seeded goods at the respective seeding position;
generate an output instruction based on the seeding information;
during seeding, acquire a seeding state of each of the plurality of seeding positions on the seeding wall, and generate a first transfer instruction based on seeding states of the plurality of seeding positions;
wherein the target workstation is configured to: acquire the output instruction, and output the seeding quantity of the to-be-seeded goods at each of the plurality of seeding positions according to the output instruction, so that a user seeds the to-be-seeded goods into the to-be-seeded container at each of the plurality of seeding positions according to the seeding quantity corresponding to the respective seeding position; and
acquire the first transfer instruction, and transfer the seeded container with completed seeding to the target carrier according to the first transfer instruction.

21. The system according to claim 20, wherein the control device is configured to:
determine the goods information of the to-be-seeded goods on the movable carrier according to task information of each pending seeding task in the seeding system, wherein the task information of the pending seeding task comprises the goods information of the to-be-seeded goods when the movable carrier arrives at the docking area of the target workstation; or
acquire the goods information of the to-be-seeded goods in response to an identification operation of a goods-information-input device on the to-be-seeded goods on the movable carrier when the movable carrier arrives at the docking area of the target workstation.

22. The system according to claim 20, wherein the control device is further configured to:
acquire a pending order, wherein the pending order comprises goods information of a plurality of types of goods;
determine to-be-seeded goods of the target workstation based on the goods information of the plurality of types of goods, and generate a handling instruction based on the to-be-seeded goods of the target workstation; wherein the handling instruction is configured to instruct the handling robot to transport the movable carrier carrying the to-be-seeded goods to the docking area of the target workstation.

23. The system according to claim 22, wherein the control device is configured to:
determine a relevance of the plurality of types of goods based on the goods information of the plurality of types of goods;
determine at least two types of goods with a relevance higher than a relevance threshold among the plurality of types of goods as the to-be-seeded goods of the target workstation based on the relevance of the plurality of types of goods.

24. The system according to claim 23, wherein the movable carrier comprises at least a first carrier and a second carrier, and the to-be-seeded goods of the target workstation comprise at least a first to-be-seeded goods and a second to-be-seeded goods; and the control device is configured to:
generate a first handling instruction based on the first to-be-seeded goods, wherein the first handling instruction is configured to instruct the handling robot to transport the first carrier carrying the first to-be-seeded goods to a first side of the docking area of the target workstation; and
generate a second handling instruction based on the second to-be-seeded goods, wherein the second handling instruction is configured to instruct the handling robot to transport the second carrier carrying the second to-be-seeded goods to a second side of the docking area of the target workstation.

25. The system according to claim 24, wherein the control device is further configured to:
send the second handling instruction to the handling robot before starting to seed the first to-be-seeded goods on the seeding wall of the target workstation, so as to transport the second carrier to the second side of the docking area of the target workstation and seed the second to-be-seeded goods carried on the second carrier; or
send the second handling instruction to the handling robot while seeding the first to-be-seeded goods on the seeding wall of the target workstation, to transport the second carrier to the second side of the docking area of the target workstation and seed the second to-be-seeded goods carried on the second carrier.

26. The system according to claim 24, wherein a seeding direction of the first to-be-seeded goods on the seeding wall is a first direction, a seeding direction of the second to-be-seeded goods on the seeding wall is a second direction, and the first direction is different from the second direction.

27. The system according to claim 20, wherein the control device is further configured to:
determine to-be-seeded goods corresponding to a target seeding position with a minimum number of types of to-be-seeded goods according to a number of types of to-be-seeded goods corresponding to each of the plurality of seeding positions on the seeding wall;
determine the movable carrier carrying the to-be-seeded goods corresponding to the target seeding position, and generate a carrier handling instruction based on the movable carrier; wherein the carrier handling instruction is configured to instruct the handling robot to transport the movable carrier carrying the to-be-seeded goods corresponding to the target seeding position to the docking area of the target workstation.

28. The system according to claim 20, wherein the target workstation has an output device configured to output a seeding quantity corresponding to the to-be-seeded goods; the control device is configured to:
determine a total seeding quantity of the to-be-seeded goods on the seeding wall and a seeding quantity at each of the plurality of seeding positions of the seeding wall based on the seeding information;
control a display device of the target workstation to display the total seeding quantity of the to-be-seeded goods on the seeding wall; and
control the output device to output the seeding quantity of the to-be-seeded goods at each of the plurality of seeding positions when the seeding quantity of the to-be-seeded goods at the respective seeding position is greater than zero.

29. The system according to any one of claims 20-28, wherein the control device is configured to:
determine that seeding of any type of to-be-seeded goods at each of the plurality of seeding positions is complete in response to a seeding completion operation triggered by a user upon completion of seeding the any type of to-be-seeded goods at the respective seeding position; or determine that seeding of any type of to-be-seeded goods at each of the plurality of seeding positions is complete in response to a detection device detecting that the seeding of the any type of to-be-seeded goods at the respective position is complete; and
determine that the seeding state of each of the plurality of seeding positions is a seeding completion state upon completion of seeding all types of to-be-seeded goods at the respective seeding position.

30. The system according to claim 29, wherein the control device is configured to:
upon completion of seeding any type of to-be-seeded goods at each of the plurality of seeding positions, determine that seeding of the any type of to-be-seeded goods at the respective seeding position is complete in response to the seeding completion operation triggered by the user on a seeding control device at the respective seeding position, or determine that seeding of the any type of to-be-seeded goods at the respective seeding position is complete in response to the seeding completion operation triggered by the user on a control corresponding to the respective seeding position on a display screen of an electronic device.

31. The system according to claim 29, wherein the control device is configured to:
when seeding states of all of the plurality of seeding positions on the seeding wall are seeding completion states, generate the first transfer instruction to control the first container pick-and-place device of the target workstation to transfer the seeded container at each of the plurality of seeding positions on the seeding wall to the target carrier.

32. The system according to claim 31, wherein the control device is further configured to:
generate a first carrier handling instruction when the seeding states of all of the plurality of seeding positions on the seeding wall are updated to seeding completion states; or
generate a first carrier handling instruction before the seeding states of all of the plurality of seeding positions on the seeding wall are updated to seeding completion states,
wherein the first carrier handling instruction is configured to instruct the handling robot to transport the target carrier to a transfer area of the target workstation, the transfer area and the seeding wall are respectively located at two sides of the target workstation, and the target carrier comprises a carrier located at the target workstation or a carrier located at a carrier storage area.

33. The system according to claim 29, wherein the control device is configured to:
when the seeding state of any one of the plurality of seeding positions on the seeding wall is a seeding completion state, generate the first transfer instruction to control the first container pick-and-place device of the target workstation to transfer the seeded container at the any one of the plurality of seeding positions to the target carrier.

34. The system according to claim 33, wherein the control device is further configured to:
generate a second transfer instruction when the target carrier does not meet a container placement condition; wherein the second transfer instruction is configured to instruct the first container pick-and-place device to transfer the seeded container at the any one of the plurality of seeding positions to a first buffer position of the target workstation.

35. The system according to claim 34, wherein the control device is further configured to:
after the first container pick-and-place device transfers the seeded container at the any one of the seeding positions to the target carrier or the first buffer position, control the first container pick-and-place device to place a container carried on a second buffer position or the movable carrier to an idle seeding position corresponding to the seeded container.

36. The system according to claim 34, wherein the control device is further configured to:
in a case that the first container pick-and-place device transfers the seeded container at the any one of the plurality of seeding positions to the target carrier or the first buffer position, control a second container pick-and-place device of the target workstation to place a container carried on a second buffer position or the movable carrier to an idle seeding position corresponding to the seeded container; wherein the first container pick-and-place device is different from the second container pick-and-place device.

37. The system according to any one of claims 20-28, wherein the control device is further configured to:
determine goods information of unseeded goods based on a pending order and the to-be-seeded goods;
determine a next workstation for seeding the unseeded goods based on the goods information of the unseeded goods;
generate a second carrier handling instruction based on the next workstation, wherein the second carrier handling instruction is configured to instruct the handling robot to transport the target carrier from a transfer area of the target workstation to a transfer area of the next workstation; and
generate a third transfer instruction after the target carrier is transported to the transfer area of the next workstation; wherein the third transfer instruction is configured to instruct the next workstation to transfer a target container on the target carrier to an idle seeding position of a seeding wall of the next workstation, so as to seed the unseeded goods at the next workstation, and the target container is a container to be seeded with the unseeded goods.

38. The system according to any one of claims 20-28, wherein the control device is further configured to:
generate a third carrier handling instruction in a case that there are no unseeded goods in a pending order, wherein the third carrier handling instruction is configured to instruct the handling robot to perform outbound processing on the goods on the target carrier.

39. A workstation, comprising:
a seeding wall comprising a plurality of seeding positions and an output device arranged at each of the plurality of seeding positions, wherein each of the plurality of seeding positions is configured for placing a to-be-seeded container; the output device is configured to output a seeding quantity of to-be-seeded goods at a seeding position corresponding to the output device, so that a user seeds the to-be-seeded goods into the to-be-seeded container at each of the plurality of seeding positions according to the seeding quantity corresponding to the respective seeding position; and
a first container pick-and-place device configured to, during seeding of the to-be-seeded goods, acquire a first transfer instruction, and transfer a seeded container with completed seeding at each of the plurality of seeding positions to a target carrier based on the first transfer instruction; wherein the first transfer instruction is generated according to seeding states of the plurality of seeding positions on the seeding wall.

40. The workstation according to claim 39, further comprising a docking area located at two sides of the seeding wall, wherein the to-be-seeded goods comprise a first to-be-seeded goods and a second to-be-seeded goods, a first carrier carrying the first to-be-seeded goods is docked at the docking area at a first side of the seeding wall, and a second carrier carrying the second to-be-seeded goods is docked at the docking area at a second side of the seeding wall.

41. The workstation according to claim 40, wherein a seeding direction of the first to-be-seeded goods on the seeding wall is a first direction, a seeding direction of the second to-be-seeded goods on the seeding wall is a second direction, and the first direction is different from the second direction.

42. The workstation according to claim 39, wherein the workstation comprises a first buffer position, and the first container pick-and-place device is configured to:
acquire a second transfer instruction, and transfer the seeded container at any one of the plurality of seeding positions to the first buffer position of the workstation according to the second transfer instruction.

43. The workstation according to claim 42, further comprising a second buffer position, wherein the first container pick-and-place device is further configured to:
place a container carried on the second buffer position or a movable carrier to an idle seeding position corresponding to the seeded container after transferring the seeded container at the any one of the plurality of seeding positions to the target carrier or the first buffer position.

44. The workstation according to claim 43, further comprising a second container pick-and-place device, wherein the first container pick-and-place device is different from the second container pick-and-place device, and the second container pick-and-place device is further configured to:
in a case that the first container pick-and-place device transfers the seeded container at the any one of the plurality of seeding positions to the target carrier or the first buffer position, place the container carried on the second buffer position or the movable carrier to the idle seeding position corresponding to the seeded container.

45. The workstation according to any one of claims 39-44, wherein the plurality of seeding positions of the seeding wall are arranged in one layer or a plurality of layers.

46. An electronic device, comprising:
one or more processors;
a memory configured to store one or more programs;
wherein when the one or more programs are executed by the one or more processors, the one or more processors implement the seeding control method according to any one of claims 1-19.

47. A computer-readable storage medium having a computer program stored thereon, wherein when the computer program is executed by a processor, the seeding control method according to any one of claims 1-19 is implemented.
